# EUROPEAN PATENT SPECIFICATION

(11) **EP 2 771 544 B1**
(45) Date of publication and mention of the grant of the patent: **05.09.2018**
(21) Application number: 12844045.0
(22) Date of filing: 23.10.2012
(51) Int. Cl.: E21B 47/13, H04L 25/24, H04L 25/49, E21B 47/12, E21B 17/00, G01V 3/30, H01Q 1/04, H01Q 7/00

(54) **HIGH-SPEED DOWNHOLE SENSOR AND TELEMETRY NETWORK**
SCHNELLER BOHRLOCHSENSOR UND TELEMETRIENETZWERK
RÉSEAU DE CAPTEURS ET DE TÉLÉMESURE DE FOND DE TROU À HAUT DÉBIT

(30) Priority: 25.10.2011 US 201161551176 P
(43) Date of publication of application: 03.09.2014
(73) Proprietor: Martin Scientific, Llc, Downingtown, PA 19335 (US)
(72) Inventor: PRAMMER, Manfred, G., Downingtown, PA 19335 (US)
(74) Representative: Barnfather, Karl Jon
(86) International application number: PCT/US2012/061453
(87) International publication number: WO 2013/062949

(56) References cited:
- WO-A1-2010/078197
- WO-A1-2010/078197
- WO-A2-01/63788
- US-A1- 2003 147 360
- US-A1- 2005 212 530
- US-A1- 2006 050 820
- US-A1- 2009 289 808
- LINGYANG SONG ET AL: "A Hybrid Relay Selection Scheme Using Differential Modulation", WIRELESS COMMUNICATIONS AND NETWORKING CONFERENCE, 2009. WCNC 2009. IEEE, IEEE, PISCATAWAY, NJ, USA, 5 April 2009 (2009-04-05), pages 1-6, XP031454001, ISBN: 978-1-4244-2947-9

## Description

### CROSS-REFERENCE TO RELATED APPLICATIONS

The present application claims priority under 35 U.S.C. §119(e) to U.S. Provisional Patent Application No. 61/551,176 filed October 25, 2011.

The subject matter of the present application is also related to the subject matter of U.S. Patent Application No. 12/470,842, filed May 22, 2009, now U.S. Patent No. 8,242,928, which claims priority under 35 U.S.C. §119(e) to U.S. Provisional Patent Application Nos. 61/128,582, filed May 23, 2008, and 61/206,550, filed February 2, 2009, and of U.S. Patent Application No. 13/142,612, filed August 10, 2011, which is the U.S. National Phase Application of PCT/US2009/069434, filed December 23, 2009, which, in turn, claims priority under 35 U.S.C. §119(e) to U.S. Provisional Patent Application Nos. 61/204,100, filed January 2, 2009, and 61/206,550, filed February 2, 2009.

### TECHNICAL FIELD

The present invention relates to the fields of data transmission systems and of sensor and actuator networks. In particular, the invention relates to data transmission systems suitable for downhole use, such as on a drill string used in oil and gas exploration, or on completion strings or on casing strings. Such strings will be summarily called "strings" or "pipe strings" in the following discussion. Such data transmission systems have been previously described by the present inventor in the above-mentioned related U.S. Patent No. 8,242,928, and in the above-mentioned related U.S. Patent Application No. 13/142,612, filed August 10, 2011.

### BACKGROUND

Downhole data transmission systems have numerous purposes: Firstly, sensor data collected in the "Bottom Hole Assembly" (BHA) needs to be transmitted ("telemetered") to the surface in real time. Secondly, the surface systems need to communicate with and have control over components of the BHA, such as for pointing the drill bit in the desired direction. Thirdly, data collected along the pipe string by distributed sensors needs to be sent in real time to the surface. Fourthly, distributed sensors and also distributed actuators need to be operated and controlled from the surface in real time. By way of example, a downhole data transmission system of this type with distributed sensors has been described in U.S. Pat. 7,207,396 to Hall et al., issued April 24, 2007.

Alternatively, a control unit within the BHA or located along the drill string may assume the role of the surface system. Such a configuration may be particularly advantageous since the BHA is continuously connected to the drill string, while the surface system may only be intermittently connected to the drill string. For example, during tripping operations, the pipe string is lifted up or lowered down while being de-assembled (while lifting) or re-assembled (while lowering) without surface communications equipment being connected to the drill string. During normal drilling operations, the surface communications system is periodically disconnected to allow for the extension of the drill string at the surface. In all these cases, it is advantageous to have a control unit located in the BHA or located along the drill string performing communications control functions instead of the surface unit.

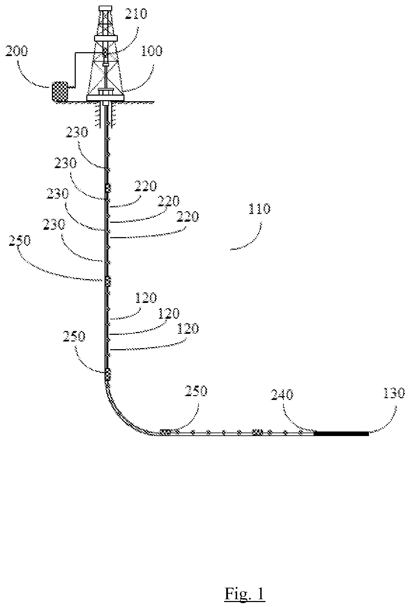

A drilling operation suitable for implementing the present invention is shown in FIG. 1. The drill rig **100** drives a drill string **110,** which is composed of a large number of interconnected sections **120,** called drill pipe joints. In a typical drilling operation, the rig rotates the drill string **110** and thus also the BHA **130.** The BHA **130** may contain various instrumentation packages; it may contain a mud motor or a rotary-steerable system, stabilizers, centralizers, drill collars, and it contains the drill bit.

The data transmission system, also shown schematically in FIG. 1, may have the following main components: the surface control system **200,** a surface interface unit **210,** multiple transmission segments **220** that carry signals up and down the pipe string, multiple repeaters **230** that periodically refresh and restore the signal, a downhole interface unit (the "BHA interface") **240,** downhole instrumentation contained in the BHA **130,** and multiple sensors and actuators ("nodes") **250** distributed along the pipe string. The BHA interface **240** or additional instrumentation within the BHA **130** may implement enough functionality to perform the tasks of the surface control system **200.** Alternatively such tasks may be performed by units located within the pipe string. A continuous data link from the surface system to the BHA may be implemented by connecting the transmission segments **220** via electric, magnetic, or electromagnetic couplers mounted at the ends of the pipe joints **120.** In addition to or instead of the end-to-end communication between the surface and the BHA **130,** this data link may also be utilized to connect to an array of sensor and/or actuator nodes **250.** As discussed above, the surface control system **200** and the surface interface unit **210** may be removed from the data transmissions system such as is the case during tripping operations or while extending or shortening the drill string.

Repeaters **230** and nodes **250** typically differ by their physical layouts. A repeater **230** typically has to be very small to fit into a pipe joint. Likewise, the power supply of a repeater **230** must be small to match the physical size constraint and typically has only little current and/or charge capacity. Consequently, a repeater may draw only very little power, in particular since its deployment time may measure into hundreds and thousands of hours. A node **250,** on the other hand, may be a separate downhole device with space for circuit boards and batteries consisting of several primary cells. Therefore, a node circuit may be substantially more complex and may have far more capabilities than a repeater circuit. In addition, nodes may receive more preventive maintenance and may have fewer deployment hours than repeaters.

For the purpose of the following discussion, it should be assumed that the node **250** would typically also implement repeater functionality, hence the term "repeater" encompasses an actual repeater **230,** but also the repeater functionality of a sensor and/or actuator node **250.** Furthermore, terms such as "surface (communication) system" and "uphole (communication) system" are used interchangeably; as are the terms "downhole (communication) system" and "BHA (communication) system", which are also used interchangeably.

The BHA **130** comprises numerous devices used in the drilling process. Numerous sensors constantly generate data describing the state of the drilling process by monitoring parameters such as weight-on-bit, torque-on-bit, vibration, magnetic orientation, gravitational orientation, etc.; the state of the borehole (temperature, pressure, gas contents, etc.); as well as the state of the rock formation (density, radioactivity, electrical resistivity, etc.). In addition, seismic-while-drilling ("SWD") or similar survey services may be conducted alternating with or during the drilling process. These surveys generate geophone data or other sensor data both in the BHA as well as along the pipe string. Typically, an aggregate of all BHA information to be sent in real time to the surface may represent a data rate of 100 - 1,000,000 bit/sec. In addition, control information needs to be constantly sent to the BHA from the surface in real time. Such control information may include steering commands for a rotary steerable system (RSS). Data to be uplinked to the surface and data to be downlinked from the surface are constantly generated and are typically not synchronized with respect to each other. Therefore, a desire exists to communicate with the BHA in both directions and as efficiently as possible.

The sensors contained in nodes **250** distributed along the pipe string may be used to monitor borehole conditions such as temperature and pressure inside and outside the pipe string; to monitor drilling conditions such as weight, tension and torque; to monitor string conditions such as tension, compression, vibration, bending, torque, and/or orientation; and may also be part of the aforementioned survey services such as SWD. A single such sensor may generate data at a rate as low as 1 bit/sec or lower and as high as 1,000,000 bit/sec or higher. Sensors could be deployed at spacings of less than 10 meters to spacings of 1 km or more. It can be readily appreciated that an array of tens to hundreds of distributed sensors can place very large data bandwidth burdens even on very fast downhole transmission systems. Therefore, a desire exists to communicate with an array of distributed sensor nodes as efficiently as possible.

The nodes **250** may also be used to operate actuators that may open and close valves or may perform other mechanical functions along the pipe string. Since such actuators may implement important safety functions, a requirement exists for fast, real-time access to these nodes and actuators. Such access should be possible even at times when other components of the data transmission system are not operational.

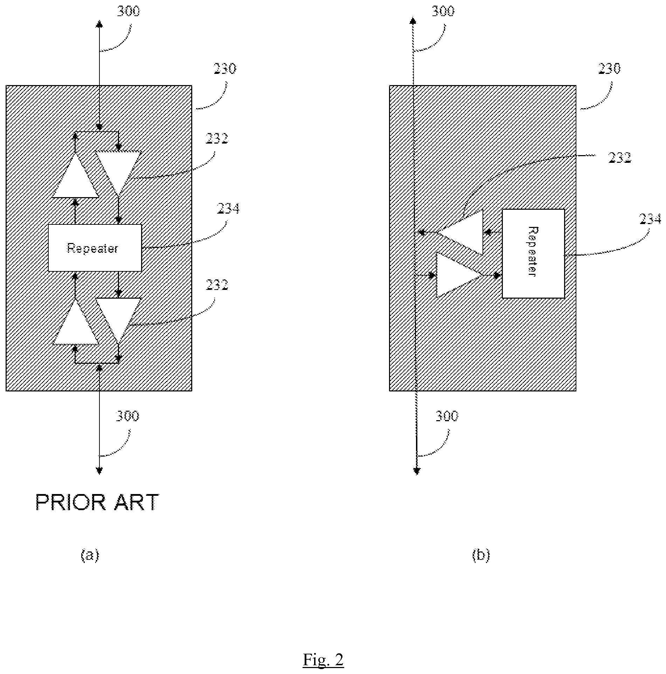

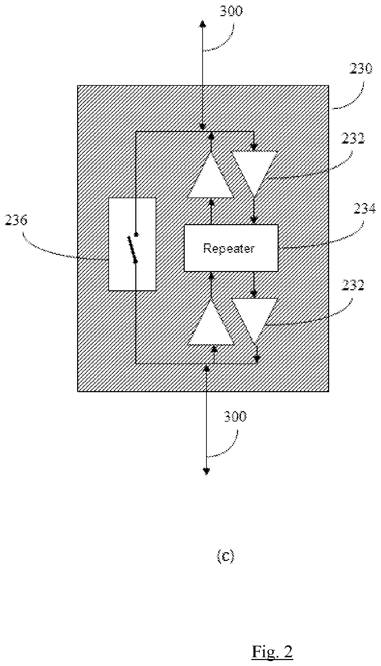

Due to the expense of furnishing the drill pipe or casing segments with signal-carrying means such as cable segments, only a single transmission line **300** (FIG. 2 and following figures) may be implemented. The transmission line **300** is to be considered "generic" in the sense that an actual implementation may comprise a large number of cable segments, couplers, repeaters, transducers, etc. arranged in series. The transmission line **300** needs to be shared among the numerous data sources, of which there may exist many hundreds on a pipe string, and is typically used both for the uphole data direction ("uplink" or "telemetering") and the downhole data direction ("downlink" or "controlling").

In order to provide uninterrupted communication in the case of a cable segment, more than one transmission line **300** may be implemented. These transmission lines may act as backup for each other and may be used as "cold standby" or as a "hot standby". A "cold standby" transmission line is activated in case of a failure of the primary transmission line, while a "hot standby" transmission line is active concurrently with the primary transmission line. A mix of "cold standby" and "hot standby" is also possible, *e.g*. in case of a temporary high data transmission rate need, a "cold standby" transmission line may be activated in parallel to the primary transmission line.

The data capacity of the transmission line or transmission lines is typically fairly large and may reach several Mbit/sec or more. However, if this capacity is to be shared among many devices, as is the case with an array of distributed sensors that needs to operate simultaneously with a high-data rate BHA, the capacity available for each sensor dwindles very fast. Therefore, a strong desire exists for the available transmission capacity to be used as efficiently as possible.

The transmission line(s) **300** is/are always dissipative, *i.e*. the signal decays and will be distorted as it propagates along the string. The signal and the information it carries need to be periodically restored by means of signal repeaters **230** along the string. As shown in FIG. 2, different possible configurations exist for such repeaters. FIG. 2a shows a conventional, "serial" configuration, in which repeaters are electrically in series with the transmission line **300.** Under the control of the repeater logic **234,** line transceivers **232** turn on and off their respective outputs and drive the "upper" and the "lower" segment of the line **300** as needed to route the signals. Although such a configuration is straightforward to implement, it is not fail-safe. A fault condition in any repeater, of which there may be many hundreds, may disable the communication between the "upper" and "lower" line sections, a condition in which the link between BHA and the surface control system may be lost. Therefore, a strong desire exists for the available transmission capacity to be fail-safe, such that the link between BHA and the surface is not lost even in the case of malfunctions in one or more intervening transmission elements.

The repeaters **230** are typically spaced between tens of meters to several hundreds of meters apart. The total number of repeaters may range from tens to thousands, depending on the length of the string and on the technology used for signal generation and signal transport. From a network view, the effect of repeaters is a slow-down of signal and data. While a signal may propagate within a single cable segment with approximately 2/3 of the speed of light in free air, typical signal delays in a repeater-type transmission system are on the order of 0.01-10 milliseconds per kilometer or 0.1-100 milliseconds end-to-end transmission time for a 10-km string. If a single transmission line **300** is to be used for two-way communications, or if several transmission lines **300** are used in parallel with the same signal direction at any given point in time, this end-to-end delay needs to be kept as low as possible, because all signals traveling in one direction need to be received before the direction of the signal flow may be reversed, causing a pause in data communications. Therefore, a strong desire exists for the signal propagation to be as fast as possible, and for the time required to repeat a signal to be as short as possible, and for the end-to-end transmission time (the "transmission latency") to be as short as possible and for the time required to switch communication directions to be as short as possible.

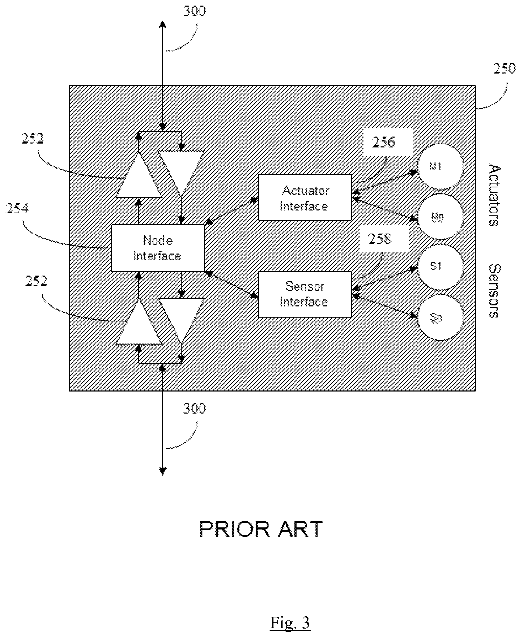

If, at specific points along the pipe string, more functionality is required than what is provided by a basic repeater, a "node" device is inserted into the string. A node may carry a single sensor or multiple sensors, or it may carry a single actuator or multiple actuators, and a node may also implement the functionality of a repeater. As shown in FIG. 3, under the control of the node interface **254,** line transceivers **252** turn on and off their respective outputs and drive the "upper" and "lower" segments of the line **300** as needed to route the signals. The node interface **252** communicates with the actuator interface **256** and/or the sensor interface **258,** as required by the specific actuator and/or sensor configuration of the node. The node interface **252** may also implement the function of repeater logic **234.** Such a node **250** is electrically in series with the transmission line **300,** which simplifies the routing and communication protocols, but does not implement a fail-safe architecture. As mentioned above, a strong desire exists for the available transmission capacity to be fail-safe, such that the link between BHA and the surface is not lost even in the case of malfunctions in one or more intervening transmission elements.

Typically, the only power sources readily available along a downhole string are batteries. These batteries are typically assembled from Lithium-based primary or secondary cells. The cells have limited power capacity and are not accessible to be replaced or to be recharged for periods of weeks and months. Therefore, a strong desire exists to minimize the electrical power consumption of repeaters and nodes. Such minimal power consumption may be achieved by minimizing the activity required by each repeater or node, and/or by minimizing the time a repeater or node is active, and/or by minimizing the data bandwidth and therefore the power consumption per repeater (and/or per node) and/or by utilizing the existing channel capacity as efficiently as possible. Therefore, a strong desire exists to provide means of communication along the network that are as efficient as possible with respect to the power consumption along the transmission line(s).

For safety reasons, it is highly desirable to construct repeaters as hermetically sealed units. As parts of the pipe string, repeaters and node devices may operate within the most-critical safety zone of a drill rig ("Zone 0"), that may contain highly flammable and/or combustible gases or mixtures of gases such as a methane/air combination. Hermetically sealed units can be shown to be safe under these circumstances, as even an explosive discharge of the internal energy storage unit (typically a primary battery cell) is contained within the sealed enclosure. On the other hand, such hermetically sealed units may be non-repairable and non-serviceable. Therefore, to provide sufficient service time, a strong desire exists for the repeater electronics to be as simple as possible and to consume as little battery power as possible. Therefore, a strong desire exists to provide means of communication that places only low demands on the repeater electronics in terms of complexity, power consumption, and data processing capabilities, while at the same time maintaining high signaling speeds and high data throughput speeds.

During extended well construction operations, it may not be possible to service or to replace the repeaters and/or nodes. In such circumstances, some of the internal batteries may become depleted while the communication system is still in operation. Such premature depletion may occur, for example, due to manufacturing tolerances and/or due to prolonged exposure to the high temperatures at the bottom of a well. Therefore, a strong desire exists to provide means of communications that can bridge over one or more non-powered repeaters and/or nodes.

During normal operations, long delays without communications activity commonly occur. Such delays occur, for example, during the transport of pipe, when pipe is on standby or racked up or when the pipe is used for well construction purposes other than drilling/communicating, such as pumping cement or fracking fluids. For the reasons outlined above, a strong desire exists to provide communication means that may put themselves at the appropriate times into stand-by modes that require little or next to no power, thus extending the lifetime of the internal power sources such as batteries.

During normal operations, pipe segments may see very different usage. Some pipe segments may be in the well only for little periods of time, other segments may be in the well for long periods of time, yet other segments may be on standby for all the time. If many, if not all pipe segments contain a repeater, these repeaters may see very different usage profiles during the well construction process. As a result, the internal power sources may deplete at different rates. It would not be prudent to estimate the remaining service time of such a communication system based on an "average" usage profile, and, on the other hand, it would be wasteful to estimate the remaining service time of such a communication system based on an "worst case" usage profile. Therefore, a strong desire exists for a communication system that can track the usage profile of every internal power source, that can interrogate the status of each internal power source before such power source goes into operation in the well and that can automatically flag the need for an internal power source to be replaced or for the device containing such power source to be replaced.

As mentioned above, a downhole data transmission system may have important safety functions. For example, sensors in the BHA may detect unsafe drilling conditions, such as the approach to an underground gas bubble that needs to be reported immediately to the surface. Therefore, a strong desire exists to establish priorities among data sources, with the BHA typically given the highest priority for transmitting data to the surface, and for mechanisms that guarantee a functioning BHA-to-surface communication link even in the presence of breakdowns and hardware malfunctions in intervening repeaters and/or nodes.

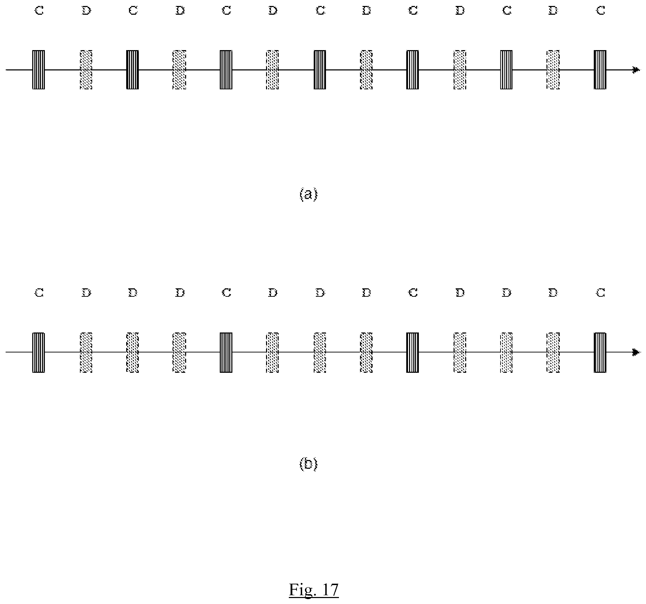

The transmission mode of a downhole data transmission system is typically bit-serial due to the aforementioned expense of the hardware associated with provisioning the transmission channel along the entire string. The implementation of many parallel channels would significantly increase the cost of such a downhole transmission system. Bits are typically represented by "pulses" as shown in FIG. 17. Numerous schemes exist for translating between bits and pulses, these schemes generally known as "line codes". One such possible code is shown in FIG. 17a. A sequence of pulses, where each pulse may be a short burst of a high-frequency carrier signal, encodes a sequence of bits such that regularly-spaced "clock" pulses ("C") establish a timing pattern and "data" pulses ("D") represent the information. The presence or absence of a particular D pulse represents a logical "0" or "1" or vice versa, *i.e.* a pair of one C pulse and one D pulse carries 1 bit of information. As shown in FIG. 17b, the data rate may be increased by changing the ratio of C to D pulses such that a fixed number of more than one D pulses follows each C pulse. In the extreme of self-clocking line codes, only D pulses are used.

There exist many possible line codes and the presentations of FIGS. 17a and 17b merely serve as an example to aid the understanding of the present invention. For example, line codes may use pulse position, pulse width, pulse amplitude, pulse phase and/or pulse frequency, among other parameters, to represent a plurality of data bits by a single pulse. These different line codes, however, may place different burdens in terms of signal handling capabilities on the repeater electronics. Each repeater must be capable of correctly restoring those physical properties of the pulses that encode information, while the physical properties of the pulses that do not encode information may be changed during the transmission process. Each of such physical property calls for different capabilities of the repeater to recognize incoming pulses and to generate outgoing pulses, with each capability adding complexity to the electronics and increasing power consumption. Therefore, a strong desire exists to provide line coding schemes that are both efficient in terms of transmitting data, *i.e.* achieve a high bit rate per pulse or group of pulses, while at the same time placing only low demands on the repeaters' signal processing capabilities.

Since the data is transmitted over a physical channel, it is subjected to interference, either from random electrical noise or from electrical interferences that may arise from within the communication system itself. As in every data transmission system, a certain amount of the transmitted data may become dropped, distorted or in any other fashion affected during transit. As it should be obvious from the foregoing description, most, if not all of the data transmitted in a downhole transmission system is mission-critical and needs to be transmitted and received without errors. Therefore, the data must be safeguarded by parity data that is used by error-checking and/or error-correcting hardware and software to ascertain the integrity of the data. In a capacity-limited network, as is the case in a downhole network, the amount of parity data required must be relatively small compared to the payload data transmitted so to maintain the efficiency of the entire system. In addition, error detection and/or error correction must occur with as little as possible system overhead. From the foregoing it should have become clear that switching signal directions may be a time-consuming process and therefore the re-transmission of data may be time-consuming as well. Therefore, a strong desire exists to provide means of error-free communication along the network that are efficient with respect to bandwidth usage and system overhead and that are tailored towards the particularities of a downhole network, *i.e.* by minimizing the number of required direction switchovers.

A commonly-used approach organizes information bits to be transmitted over a channel in aggregates called packets that contain both user data ("payload") and descriptive data ("header"). Typically, bits are grouped into bytes and packets consist of several bytes. Each byte or groups of bytes have specific functions in a packet: *e.g*., destination address, source address, packet length, payload data, check bytes, etc. All bits comprising a packet are transmitted as an uninterruptible, single block between network nodes. The data packets are separated by short time periods in which no data is transmitted. These gaps are necessary to allow a switched-packet network to change the routing between network nodes and to route individual packets over different signal paths as needed. The information on how to arrange the routing path on a per-packet basis is derived from the packet headers and from routing tables describing the current configuration of the network. Any network node can determine from a packet by inspection (a) the packet's validity, and (b) the intended disposition of the packet. A node may find itself as the intended recipient of a packet or the node may be required to forward the packet. Damaged packets, in which the check bytes do not agree with the rest of the packet, are typically discarded as soon as they are detected. Organizing data in packets is a well-known method of routing data through a network. Unfortunately, it may be a very inefficient method in cases where a large number of data sources have to share a single signal channel, as is naturally the case for a downhole network.

Another problem with the packeting approach is the loss of data bandwidth associated with the non-payload data such as the packet header. Real time data needs to be frequently updated, *i.e.* comes in relatively small chunks, and packeting the payload data may require a comparatively significant number of additional non-payload bits.

Yet another problem with data packeting is the overhead associated with configuring the transmission line ahead of each data transmission and the finite signal propagation speed through a repeater-amplified network. Every time the signal direction is changed, time is spent waiting for the last packet traveling in the old direction to arrive at its destination and for setting up the new, opposite data direction along the entire transmission line, thereby further reducing the efficiency of a bandwidth-limited network. A typical downhole communication system is disclosed, for example, in the patent document WO 2010/078197 A1 (MARTIN SCIENT LLC [US]; PRAMMER MANFRED G [US]) 8 July 2010 (2010-07-08).

From the foregoing description of the general downhole communications problem and the various approaches to solve it, it can be readily appreciated that new solutions are needed to implement a downhole communications network that may comprise a large number of repeaters and/or communication nodes, and that fulfills the requirements of high efficiency, combined with low power consumption and fail-safe operation and that can combine simultaneous prioritized array-type communications with end-to-end communications, using a single or a small number of parallel transmission lines(s). The present invention addresses these needs by the subject-matter of independent claims 1 and 9. Further advantageous embodiments are defined by the dependent claims 2-8, 10-15.

### SUMMARY

A downhole data transmission system addresses the needs in the art by communicating data along a downhole string including a communications master selected from the group including a surface interface, a downhole interface, and a node, and including a communications line including a plurality of transmission segments that carry signals along the downhole string, and a plurality of low-power signal repeaters that periodically refresh and restore signals transmitted along the downhole string. To minimize power consumption and to improve communications efficiency, the surface interface, the node, and the downhole interface communicate over the communications line(s) using pulses of radiofrequency energy. These pulses may be organized in data frames that may include one or more wake-up pulses. The data transmission system may be further characterized in that the repeaters and/or the communications master are connected to the communications line in a fail-safe fashion wherein the pulses of radiofrequency energy bypass or pass through the signal repeater and/or the communications master when the signal repeater and/or the communications master fails.

In an exemplary embodiment, the data transmission system is characterized in that the repeaters and/or the nodes are connected to the communications line(s) in a "T" or "side stub" configuration to provide fail-safe operation on the communications line(s). The data transmission system in such a system is further characterized in that the repeaters and/or the nodes are connected to the communications line(s) parallel to a switch that is defined-closed or defined-open in its deactivated state to provide fail-safe operation on the communications line(s).

In the same or another exemplary embodiment, the data frame includes at least one wakeup pulse and one or more data pulses. In the exemplary embodiment, the communications master communicates over the communication line(s) by modulating data onto pulses of radiofrequency energy and at least one of the plurality of signal repeaters regenerates the pulses of radiofrequency energy without decoding all of said data modulated onto the pulses. Preferably the pulses of radiofrequency energy bypass or pass through a failsafe signal repeater when the failsafe signal repeater fails. In addition, the communications master may be given transmission priority over other transmission devices. Respective data frames also may be spaced apart to allow high priority data transmission between data frames.

These and other characteristic features of the invention will be apparent to those skilled in the art from the following detailed description.

### BRIEF DESCRIPTION OF THE DRAWINGS

FIG. 1 is a schematic representation of a drilling environment with data transmission elements installed.
FIG. 2a is a schematic representation of a generic prior art signal repeater.
FIG. 2b is a schematic representation of a signal repeater according to the present invention.
FIG. 2c is a schematic representation of another signal repeater according to the present invention.
FIG. 3 is a schematic representation of a prior art generic node.
FIG. 4 is a schematic representation of a node according to the present invention.
FIG. 5 is a schematic representation of another node according to the present invention.
FIG. 6 is a conceptual drawing of a pipe joint according to the present invention, sectioned parallel to the main axis and with elements of the data transmission system installed.
FIG. 7 is a conceptual drawing of a short joint according to the present invention, sectioned parallel to the main axis and with elements of the data transmission system installed.
FIG. 8 is a cross-sectional view of the pipe joint shown in FIG. 6 along the plane A-A'.
FIG. 9 is the view labeled "B" in FIGS. 6 and 7, showing the pin end and the pin coupler.
FIG. 10 is the view labeled "B" in FIGS. 6 and 7, showing the pin end and an alternate pin coupler implementation.
FIGS. 11a - 11c are cross sections along the planes B-B', C-C' and D-D', corresponding to FIG. 10.
FIG. 12 is the view labeled "C" in FIGS. 6 and 7, showing the repeater box end.
FIG. 13 is a conceptual circuit block diagram of repeater electronics.
FIG. 14 is a conceptual circuit block diagram of node frontend electronics.
FIG. 15 is a conceptual view of a tool joint with mounted "button" repeater.
FIG. 16 is a conceptual circuit block diagram of "button" repeater electronics.
FIGS. 17a - 17b are schematic representations of two PCM line codes.
FIG. 18 is a schematic representation of a PPM line code.
FIG. 19 is a schematic block diagram of a node/terminal modem.
FIG. 20 is a schematic block diagram of the FEC unit of a node/terminal modem.
FIG. 21 is a schematic block diagram of the PPM encoder portion of a node/terminal modem.
FIG. 22 is a schematic block diagram of the PPM decoder portion of a node/terminal modem.
FIG. 23 is a schematic block diagram of the error correction unit of a node/terminal modem.
FIG. 24 is a conceptual timing diagram for a communication cycle.
FIGS. 25a- 25c are conceptual timing diagrams for communication sequences.
FIGS. 26a- 26c are conceptual timing diagrams for additional communication sequences.

### DETAILED DESCRIPTION OF ILLUSTRATIVE EMBODIMENTS

A detailed description of illustrative embodiments of the present invention will now follow with references to Figures 2b-26c. Although this description provides a detailed example of possible implementations of the present invention, it should be noted that these details are intended to be exemplary and in no way delimit the scope of the invention.

FIG. 2b shows a possible implementation of the preferred "fail-safe" operation of a repeater in accordance with the invention. The repeater **234** is interfaced to the communications line **300** in a "T" or "side stub" configuration. In this configuration, it is straightforward to arrange for the transceivers **232** not to interfere with the line **300** in case of a repeater failure and the signals can bypass the failed repeater using the existing "pass-through" connection. Operating repeaters, on the other hand, monitor the line signals and replace weak signals with refreshed copies with restored voltage levels and restored timing. Signals, once launched into the transmission line **300,** are free to travel up and down the line, only limited in their range by the transmission dissipation process. The correct routing of signals is therefore more complex and must take into account the physical properties of the line **300.** Since the transceivers **232** have equal electrical access to the transmission line, signal corruption may occur if two or more transmitters are simultaneously active and appropriate protocols and fail-safe safeguards must ensure that such situations cannot arise.

FIG. 2c shows another possible implementation of the preferred "fail-safe" operation of a repeater. Here, the repeater **234** is interfaced to the communications line **300** in a combination of "T" and "serial" configurations. In this "parallel" configuration, it is also straightforward to arrange for the transceivers **232** not to interfere with the line **300** in case of a repeater failure and the signals can bypass the failed repeater via a pass-through connection. The switch **236** shown in Fig. 2c may be a semiconductor switch based on high-frequency FET technology. A suitable component is the BF1118 integrated circuit made by NXP Semiconductors N.V., 5656 AG Eindhoven, The Netherlands. Such a component comprises a depletion-type field effect transistor (FET) that implements a switch for high frequency signals that is closed (*i.e.* nearly transparent for signals) when unpowered, thereby providing a default pass-through signal path. The switch **236** may be controlled by a microprocessor unit (MPU) **410** (not shown in Fig. 2c for clarity) or by dedicated hardware that opens the switch only if (a) electrical power is available (typically from a battery), (b) the MPU **410** or dedicated hardware itself is working properly, and (c) the MPU **410** or the dedicated hardware detects proper operation of the transceivers **232** and the repeater logic **234.** The "parallel" implementation combines the advantages of the "T" configuration, *i.e.* fail-save bypassing of a failed or unpowered repeater, with the advantages of the "serial" configuration, such as ease of signal routing and simple communication protocols.

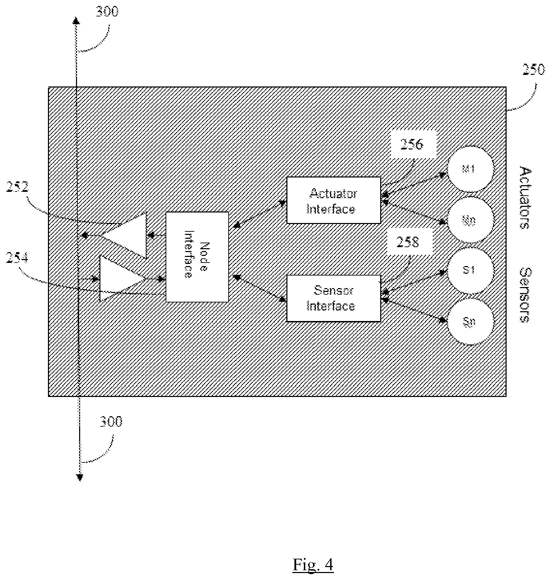

As mentioned in the foregoing, a node of the "serial" type, as the name implies and as shown in FIG. 3, is electrically in series with the transmission line **300,** which simplifies the routing and communication protocols, but does not implement a "fail-safe" architecture. For critical applications, such as downhole communications, a fail-safe configuration is preferred, such as the "T" implementation of FIG. 4. The configuration of FIG. 4 necessitates more complex communication protocols, but offers a fail-safe method for disconnecting a failed node. If a node loses power or suffers a failure, the transceivers connected to line **300** power down, which effectively disconnects the node electrically from the transmission line **300** and enables signals to traverse the failed node in both directions.

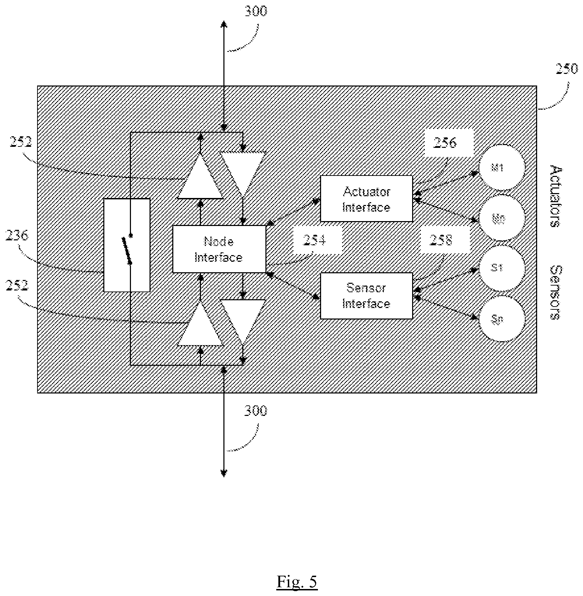

FIG. 5 shows the "parallel" configuration for a fail-safe node. In this case a combination of "T" and "serial" configuration is used. In analogy to the repeater of FIG. 2c, the node of FIG. 5 incorporates a high-frequency switch **236** that electrically connects the transmission line segments **300** when unpowered, thereby providing a default pass-through signal path. The switch is controlled by an MPU **410** (not shown in Fig. 5 for clarity) or dedicated hardware that opens the switch only if (a) electrical power is available (typically from a battery), (b) the MPU **410** or dedicated hardware itself is working properly, and (c) the MPU **410** or dedicated hardware detects proper operation of the node, in particular of transceivers **252** and the node interface **254.** The "parallel" implementation combines the advantages of the "T" configuration, *i.e.* fail-safe bypassing of a failed or unpowered repeater, with the advantages of the "serial" configuration, such as ease of signal routing and simple communication protocols. If a node loses power or suffers a failure, the transceivers **252** connected to line **300** power down and the switch **236** closes, which effectively disconnects the node electrically from the transmission line **300** and enables signals to traverse the failed node in both directions.

Fail-safe architectures, such as the exemplary ones described above, may be implemented in communication systems comprising segments of a transmission line **300.** If "Range 2"-type pipe joints are used, such segments are typically 31 ft. long. If "Range 3"-type pipe joints are used, such segments are typically 46 ft. long. Other components of a pipe string may have irregular lengths and therefore may comprise transmission line segments **300** of irregular lengths.

The transmission line segments **300** may be implemented using coaxial cable. The transmission line segments **300** may also be implemented using unshielded twisted-pair (UTP) cable or shielded twisted-pair (STP) cable. The transmission line segments may also be implemented using single wires, with the metallic pipe or a portion thereof used as electrical return path.

In a particular embodiment, one transmission line segment **300** may be used. Alternatively, two or more parallel transmission line segments **300** may be used. Also, the number of parallel transmission line segments **300** may differ between adjacent pipe string segments. For example, regular pipe joints may be equipped with two parallel transmission line segments **300** to provide redundancy in the case of a cable failure. Since there may be 1,000 or more such pipe joints in a string, such redundancy in the pipe joints may be essential for the functioning of the communication system. A specialized pipe string component, however, of which there may only one or a few in a pipe string, may be wired only with a single transmission line segment **300.** Examples of such specialized components used in drill strings are jars, reamers, hole enlargers, and centralizers, to name a few.

The pipe joints may be connected to other pipe joints and/or to other string components via rotary connections. At that junction, electromagnetic couplers may couple signals bi-directionally between adjacent transmission lines **300.** Such coupling may be inductive or capacitive or may be accomplished via high-frequency electromagnetic short-range coupling. In the latter case, the couplers may comprise one or more high-frequency antennas that may be brought into electromagnetic resonance at the operating frequency and that exchange electromagnetic energy while in resonance. It is advantageous to choose a coupling mechanism that is consistent with the signal propagation on the transmission line **300,** *e.g.* one that uses the same a.c. frequency as that on the transmission line. That way, the use of transponders or translators at each junction is unnecessary. It has been found that short bursts ("pulses") of electromagnetic energy in the frequency range of 10 MHz to 3 GHz travel well over transmission lines, in addition to couple well across gaps between transmission line segments, and to bring electromagnetic couplers into resonance, and to be repeated by simple electronics that can be powered by small batteries over long time periods. In an exemplary embodiment, the operating frequency and the tuning frequency for the couplers is selectable in the range of approximately 50 MHz to 500 MHz.

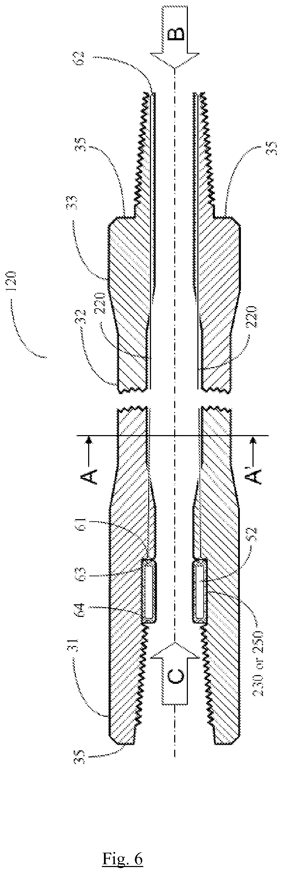

FIG. 6 shows in exemplary fashion a possible implementation of the data transmission system in a pipe string, which may be used, for instance, as a drill string. Signals, data and/or power are carried redundantly over two, parallel transmission line segments **220** mounted within each pipe joint **120.** Preferably, the transmission lines are located as far away from each other as possible such that a damaging event destroying one transmission line segment **220** is unlikely to also damage the other transmission line segment **220.** The pipe joint **120** is shown in FIG. 6 sliced parallel to its axis, with two transmission line segments **220,** a repeater **230** (shown as example) or a node **250** (not shown) and electromagnetic couplers **61** and **62** installed. The box **31** of pipe joint **120** is back-bored to accommodate the repeater **230.** The repeater **230** houses the couplers **63** and **64.** Within the repeater **230** and sealed from the outside are located numerous cavities **52** that may house electronic circuits and batteries. Adjacent cavities **52** may be joined together to simplify electrical connections or to house odd-shaped electrical components. The inwards-facing coupler **63** interfaces with the box-mounted coupler **61.** The box-mounted coupler **61** is electrically connected via transmission lines **220** to the pin-mounted coupler **62.** When the connection is made, the pin **33** of the adjacent pipe joint engages the outwards-facing side of the repeater **230** at shoulders **35** such that the pin-mounted coupler of the adjacent pipe joint interfaces with coupler **63.** Thus, an assembled pipe string contains a continuous chain of transmission lines **220** that extend the length of tubular section **32,** couplers **61** and **63** and repeaters **230** with couplers **62** and **64.** Such a chain is capable of transmitting high-speed telemetry data in both directions via radiofrequency carrier signals that are modulated with data. Such a chain is also capable of transmitting high-frequency power useful for powering repeaters, sensor electronics and for recharging rechargeable batteries contained in repeaters and/or sensor electronics.

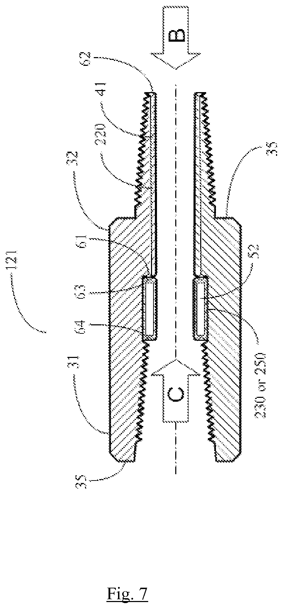

FIG. 7 shows a short or "pup" joint **121,** consisting of a box tool joint **31** and a pin tool joint **32** welded together without an intermediate tubular. Alternatively, a short tubular may be used. The box is back bored and may house a repeater **230** (not shown) or a node **250** (shown as example). The transmission lines **220,** connecting couplers **61** and **62,** are contained in the routing channels **41.** The purpose of the pup joint may be the introduction of a repeater or a node at any desired location within the data transmission chain without expending the full length of a pipe joint. It may be necessary to introduce a repeater in close vicinity of a passively wired-through pipe string component. Such passive pipe string component may lack the space to mount a repeater within the component. It also may be desirable to introduce a node at various places within the pipe string to sense local drill string conditions or formation conditions or drilling fluid conditions. It also may be desirable to introduce a node at various places within the pipe string to house actuators such as mechanical switches and/or valves. In all such exemplary cases, a pup joint as shown in FIG. 7 may be beneficial.

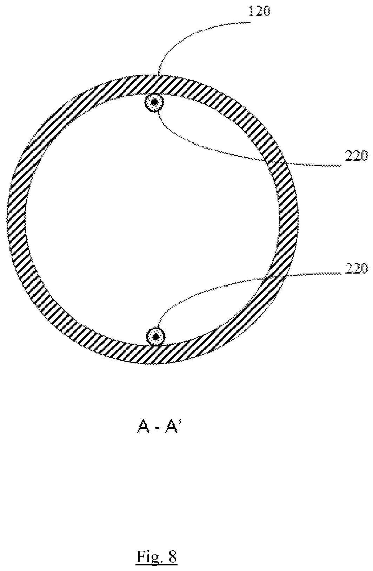

A cross sectional view cutting through the tubular **32** and the transmission line segments **220** along the plane A-A' of FIG. 6 is shown in FIG. 8. The transmission line segments **220** may be implemented as steel-armored coaxial cables on opposite sides of the pipe joint **120** as illustrated. The cables may also be mounted at angles other than 180° with respect to each other. Preferably, the cables are of the low-loss variety suitable of operation up to 3 GHz. Cables with diameters of around 0.250" (6.4 mm), with solid or stranded inner conductor with a diameter of around 1 mm and with solid polytetrafluoroethylene (PTFE) as dielectric are suitable. Alternatively, the transmission line segments **220** may be implemented as twisted-pair (TP) cables, preferably of the shielded variety (STP). STP cables with PTFE wire insulation are readily available with a variety of suitable major diameters and may be routed through steel tubes that act as protective armor for the TP cable(s). The preferred characteristic impedance range of transmission line segments 220 is about 50-100 ohm.

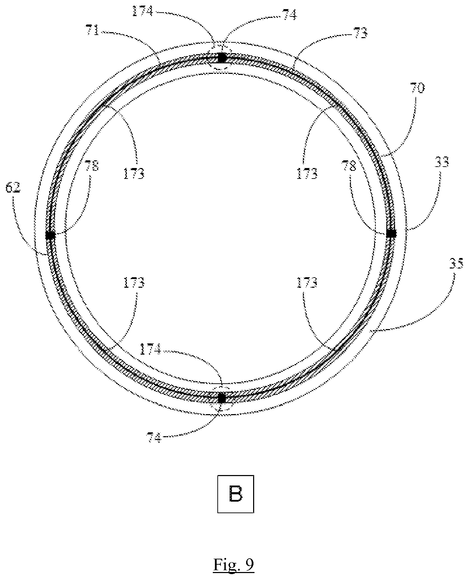

As shown in FIG. 9, which is view "B" in FIGS. 6 and 7, the face of the pin **33** houses a coupler **62** contained in a circular groove **70** of approximately 5 mm width and 5-10 mm depth. Although not shown in FIG. 9, the following discussion equally applies to the box coupler **61** and to the repeater-mounted couplers **63** and **64.** The walls of groove **70** may be coated with an electrically highly conductive layer such as a plasma-spray applied copper, silver or gold film. The coupler **62** is a self-contained, encapsulated unit that may be press-fit into the groove **70.** An active component within the coupler **62** is a circular antenna **71.** The antenna **71** is buried with the coupler **62** at a depth of 1-2 mm, thereby protecting the antenna from damage. The antenna **71** preferably comprises multiple wire segments ("antenna segments") **173** of approximately equal length. Buried below the wire segments **173** and also part of the antenna structure is a metal ring **175** (not visible in FIG. 9). The metal ring brings mechanical stability and integrity to the coupler structure and also serves the electrical purpose of closing the electrical current paths within the antenna structure. Therefore, the antenna segments and the metal ring should be coated with an electrically highly conducting material such as copper, silver or gold. The distance between the antenna segment(s) and the metal ring should be on the order of several millimeters in order to achieve good antenna sensitivity.

Preferably, the wire segments **173** are brought in electrical resonance by means of capacitor blocks **74** and **78.** Each capacitor block may comprise one or more individual capacitors. It is also possible to leave (a) capacitor block(s) unpopulated. The resonance frequency is chosen to be close to the system's operating frequency, causing amplification of voltages and electrical currents with the antenna structures formed by wire segments **173** and capacitors **74** and **78.** There are numerous schemes to achieve resonance in an antenna structure. As an example and without loss of generality, each wire segment **173** may be terminated by an individual capacitor at each end. Such a balanced design displays certain advantages such as very low sensitivity with respect to stray capacitances. In an implementation, the capacitor blocks **74** each contain two capacitors (one belonging to each neighboring antenna segment **173,** and the capacitor blocks **78** are unpopulated. The capacitor blocks **74** and **78** may house surface-mounted device (SMD) capacitors that are protected from mechanical stresses by virtue of being encapsulated within a block. The blocks may be formed from high-temperature plastics, high-temperature reinforced epoxies, high-temperature glasses or may be miniature ceramic "boxes". The necessary electrical connections in and out of the blocks are made via electrical feed-throughs.

The antenna **71** is permanently electrically connected to one or more radiofrequency-capable, high-temperature connectors **174** that are part of the coupler **62** (or **61, 63, 64,** respectively). These one or more connectors mate with another set of connectors that are attached to cables **220** (hidden from view in FIG. 9). When installing the coupler **62** (or **61, 63, 64**) into groove **70,** corresponding connectors engage with each other and electrically connect the antenna segments **173** to the corresponding cable segments **220.** Hence, there exists a one-to-one-to-one relationship between antenna segments **173** in a pin coupler **62** and cable segments **220** and the antenna segments **173** in a box coupler **61.**

Under normal operating conditions, the antenna segments **173** resonate synchronously with each other. However, although mechanically and electrically connected, the antenna segments **173** can also resonate independent of each other. This is the case if an antenna segment has been damaged and/or an attached cable has been damaged. If an antenna segment **173** does not resonate at the operating frequency due to damage, the remaining antenna segment(s) **173,** which each still part of an resonance-capable L-C circuit (formed by the wire segments **173** and the capacitor blocks **74** and **78**), still remain capable of electromagnetic resonance at the operating frequency and hence can transport signals, data and/or power around the damaged antenna segment.

The characteristic impedance of a cable segment **220** generally does not match the characteristic impedance of an antenna segment **173.** As an example, a typical cable impedance may be 50 ohm and a typical antenna impedance may be 1,000 ohm. For optimum signal and power transfer, however, it is desirable to match these impedances. Such an impedance match may be accomplished via capacitors contained in capacitor blocks **74** and/or **78.** In particular, capacitors contained in blocks **74** placed in series between wire segment(s) **173** and cable segment(s) **220** may serve this purpose. If the antenna is operated slightly below its "native" resonance frequency, the impedance of the antenna segments becomes "inductive", and forming "L" circuits with the capacitor(s) **74.** The cable segment is attached to the low-impedance port of the "L" circuit and the antenna segment is at the high impedance point of the "L" circuit, thereby accomplishing the desired impedance transform.

A perfect impedance match to the impedance of the cable (*e.g.,* 50 ohm) is not necessarily desirable. By purposefully loading the antenna(s) with unmatched impedances, the impulse responses of the antenna(s) may be optimized. As will be shown in a section below, the line signaling is typically accomplished using short radiofrequency pulses. These pulses comprise only a small number of radiofrequency cycles. A conventional optimal match between antenna(s) and cable(s) typically results in the maximally possible power transfer at the expense of a delayed rising edge of a transmitted pulse. Thus, reducing the power transferred between the antenna(s) and the cable(s) by overloading the antenna(s), may result in faster pulse responses, benefitting higher pulse-repetition rates and hence higher data rates.

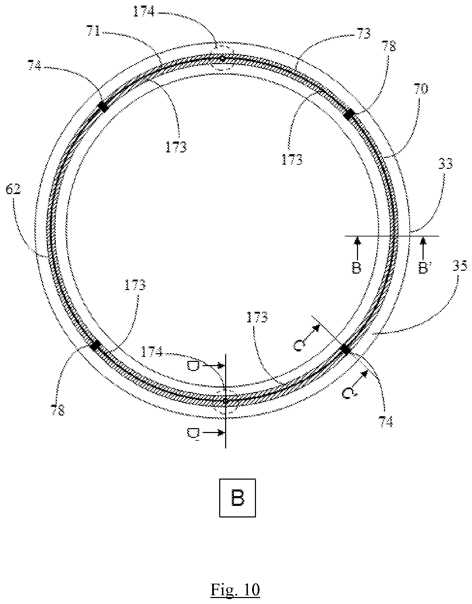

An impedance transform is also possible without a series capacitor. It can be readily appreciated that on resonance electromagnetic standing-waveform patterns appear on the antenna segments 173. These standing waves create points of high and low voltages around the circumference of the antenna segment(s). By tapping into the antenna segment(s) at pre-selected points, impedance matches (or calculated mismatches as outlined above) may be accomplished. A possible implementation is shown in FIG. 10. Compared to FIG. 9, the antenna structure is rotated, while the connectors **174** are kept in place to interface with the cables in the North-South positions shown in FIG. 8. The antenna's angular position of approximately 45° as shown in FIG. 9 is only exemplary. Angular positions between approximately 0° (measured from the end of an antenna segment **173**) and 80° have been shown to produce useful impedance-matching trade-offs between power-matching and pulse responsiveness in the case of the "balanced" antenna segment with terminating capacitors at each segment end. Other antenna configurations, such as an unbalanced capacitor distribution require other angular positions for optimizing power transfer and/or impulse response.

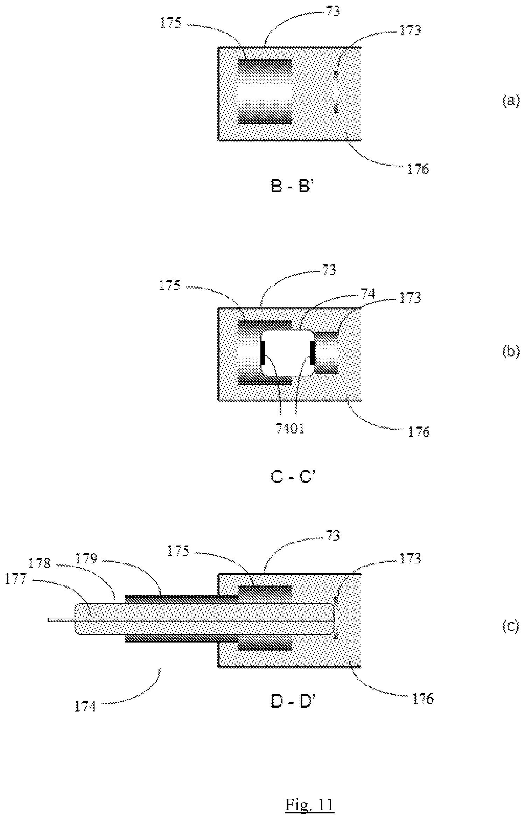

As shown in FIG. 11, the entire coupler assembly comprising antenna segments), metal ring, capacitor blocks and connectors is preferably encased in a high-temperature plastic material **176** that is non-conductive and suitable as a radiofrequency dielectric. Suitable materials are polyetheretherketone (PEEK), or high-performance reinforced epoxy materials or various elastomers such as the fluoroelastomer "Viton Extreme", made by DuPont, Wilmington, DE. The outer dimensions of the encased coupler should match the dimensions of the groove **70** to produce a tight fit. The final outside of the coupler is preferable a thin, electrically highly conductive metallic layer **73** that acts as a reflector for all radiofrequency fields emitted by the couplers. Such a layer may be applied by flame-spraying all surfaces of the coupler except the front face. Obviously, the built-in connectors **174** must not be shorted out in the process. The layer thickness should be at least three times the electrical skin depth at the resonance frequency. In the frequency ranges of interest (VHF), a conductive layer thickness of about 50-100 micrometer may be sufficient. Alternatively, the coupler assembly may be encased in a steel shell that conforms to the dimensions of the groove **70.** Such a shell may be advantageous particularly in the case of soft encapsulating materials such as elastomers. Such a steel shell case may also serve as a cast during the encapsulation process, aiding in the dimensional stability of the finished coupler. It may be of advantage to cover the inside of the shell with a thin, electrically highly conductive metallic layer **73,** instead of painting or flame-spraying the elastomeric body.

FIGS. 11a-11c detail various cross sections through the coupler **62** as shown in FIG. 10. The cross section B-B' (FIG. 11a) shows the antenna segment **173** and the metal ring **175,** both embedded in the plastic material **176,** forming a self-contained ring structure. The structure is enclosed by the metallic layer **73** on all sides with the exception of the coupler's front face. FIG. 11b (cross section C-C') is a cut through the coupler at a location of a capacitor block **74.** This block is fixed between the metal ring **175** and the antenna segment **173,** preferably via clamping, welding, gluing or high-temperature soldering. Metallic contact areas **7401** on opposite sides of the capacitor box make the necessary electrical contacts to the ring **175** and to the antenna segment **173,** also preferably via clamping, welding, gluing or high-temperature soldering. FIG. 11c (cross section D-D') details the area of the connector **174.** The connector **174** comprises a metal pin **177** that connects the antenna segment **173** with the inner core of a coaxial cable or one or both wires of a twisted-pair cable (neither is shown in FIG. 11c); an electrically insulating element **178** that may be made of the same material as the encapsulating material **176** such as PEEK, or may be a different material such as a ceramics; and a metallic outer shield **179** that connects the shield of a coaxial cable or the shield of a shielded twisted-pair cable (STP) with the metal ring **175** and the outer layer **73.**

Although the foregoing discussion was mostly centered around the pin coupler **62** for clarity, it equally applies to the box coupler **61.** Furthermore, it also applies to the repeater-mounted couplers **63** and **64.** There is a one-to-one relationship between antenna segments **173** in pin coupler **62** and box coupler **61,** and hence the number of antenna segments **173** in these couplers is the same. There are a number of advantages, for example, it is easy to produce couplers with identical resonance frequencies if they share identical dimensions. No such matching requirement exists for the number of antenna segments in the repeater-mounted couplers; therefore, a repeater may use a different number of antenna segments **173.** For illustrative purposes, however, it will be assumed in the following that each antenna **71** comprises two antenna segments **173.**

Instead of a coaxial cable, different cable types may be used. In particular, the use of shielded twisted-pair (STP) cable has been found useful. Suitable products are manufactured by W. L. Gore & Associates, Inc., Newark, DE, as "Gore Shielded Twisted Pair / Controlled Impedance Wire". The advantage of using STP cable may be appreciated by considering that the outer screen of a coaxial cable functions both as an electric shield and as a magnetic shield, therefore requiring substantial current-carrying capabilities over a very wide frequency range (10 kHz - GHz), and therefore taking up valuable cross-sectional area. An STP cable, on the other hand, is magnetically self-shielding by virtue of the twisted geometry, and requires only a thin electric shield such as aluminum foil. The thickness of the aluminum foil is well matched to the electric skin depth at the operating frequencies of the present invention, about 10 MHz - 3 GHz, which makes the foil a suitable outer conductor in this radiofrequency (RF) range. Conventionally, in an STP cable the twisted wires are used in a series circuit ("differential mode"), with characteristic impedances of 100 - 120 ohm. In the context of the present invention, however, it has been found advantageous to operate the twisted wires in parallel ("common mode"), with characteristic impedances of 50 - 60 ohm. For common-mode operation, each cable segment end, the STP cable's inner conductors are electrically connected to the coupler's connector pin **177** and to the antenna segment **173,** while the shield of the STP cable is electrically connected at both ends to the coupler's connector shield **179** and to the metallic ring **175.** The dielectric insulation surrounding each wire acts to suppress the so-called "proximity effect" that otherwise would negate the advantage of having two wire surface areas available in parallel for RF current transport.

Alternatively, the STP cable may be operated in "half-differential mode", wherein one wire is used as the signal-carrying "hot" wire by virtue of being electrically connected to the antenna segment **173** (and pin **177**), and the other wire as the "cold" return wire by virtue of being connected to the metallic ring **175** (and the shield **179**). In this configuration, the cable's ohmic resistance doubles, which is compensated by cable's characteristic impedance, which also doubles, leaving the cable's attenuation per unit length approximately constant. In this configuration, the impedance matching between coupler and cable must be adjusted as discussed above to avoid losses through reflections at the coupler/cable interface. As discussed, the methods for impedance matching can readily accommodate the characteristic impedance of 100 - 120 ohm exhibited by the twisted-pair cable in "half-differential mode". Also possible is the use of a twisted-pair cable in "full-differential mode". In "full-differential mode", both wires of the twisted pair are "hot", *i.e.* are signal-carrying conductors, but in complementary a.c. phases. It can be readily appreciated that adjacent resonating antenna segments **173** have points of equal, but out-of-phase voltages in their standing-waveform patterns. These complementary points, when tapped into via pins **177,** are suitable of connecting to a twisted-pair cable in "full-differential mode". The various possible variations and permutations fall within the scope of the present invention.

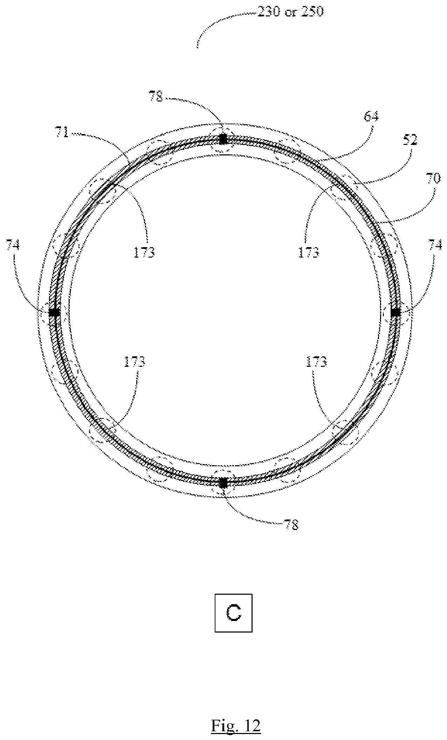

The head-on view of the repeater **230** or node **250,** *i.e.* the view labeled "C" in FIGS. 6 and 7, is shown in FIG. 12. The repeater **230** contains in its outward-facing face the coupler **64.** The coupler **64** is of similar construction as the coupler **62,** consisting of a groove **70** with an antenna **71.** Electrically, the antenna **71** is connected to the interior of the repeater **230** via connectors or feed-throughs **174** (not shown in FIG. 12). Within the repeater **230** and sealed from the outside pressure, are located numerous cylindrically shaped cavities **52** that may house electronic circuits and batteries. Not shown in FIG. 12 are wire channels that connect the cavities **52** for the purpose of signal and power wire routing. The coupler **63,** which is located on the opposite face of the repeater **230** and which is not shown in FIG 12, is constructed in the same fashion as the coupler **64.**

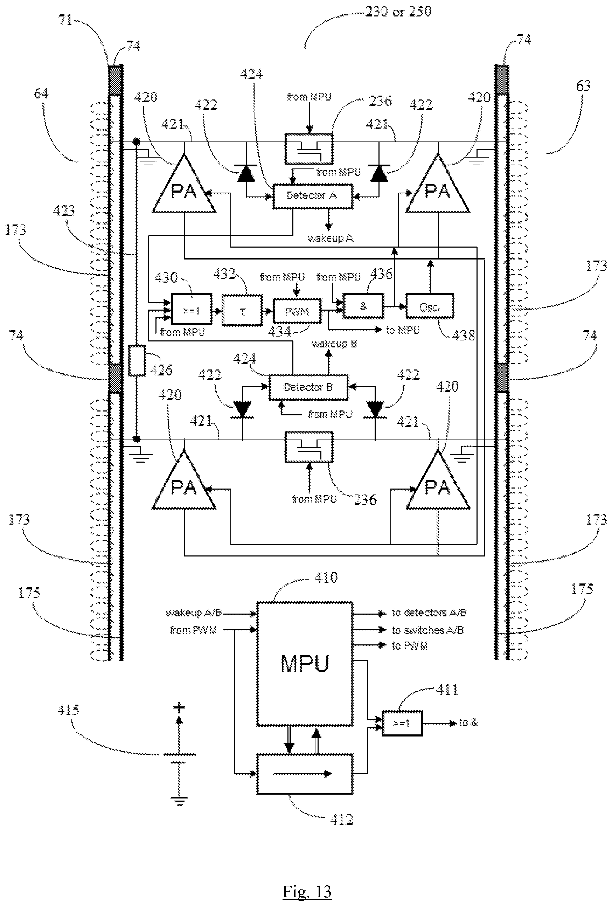

An exemplary, conceptual electrical block diagram of a repeater **230** (and possibly of the frontend of a node **250**) is shown in FIG. 13. As discussed earlier, the repeater carries the couplers **63** and **64.** As shown in an exemplary embodiment, each coupler carries one antenna **71** that comprises two antenna segments **173** and two capacitor blocks **74.** The impedance matching method is assumed to be the "tapping" method of FIG. 10 that has been discussed above. Alternatively, the "series capacitor" impedance matching method may be used.

As discussed earlier, semiconductor high-frequency switches **236** may be used to provide continuous electrical pathways between couplers **63** and **64.** Since in this example two antenna segments **173** are used, two pathways **421** need to be provided in order to have full redundancy. The switches **236** (*e.g.* BF1118 by NXP) are conducting signals if the switches are unpowered and are otherwise under the control of the microprocessor unit (MPU) **410** or some dedicated hardware. Therefore, the default fail-safe condition of the circuit is continuity between couplers, *i.e*. non-amplified signal transfer. The crossover circuit **426** provides a cross-path **423** between the two electrical pathways **421** provided by the switches **236.** In normal operations, there would be no voltage difference between pathways **421** and the crossover circuit **426** would have no function. In the event of a partial failure, however, one pathway may carry all or most of the usable signal and the crossover circuit **426** may spread that signal to the other pathway in order to restore signal transmission on both pathways. The crossover circuit **426** also purposefully attenuates the cross-coupled signal such that an internal failure resulting in an electrical short in either pathway **421** would not suppress the remaining signal on the other pathway **421.** In the simplest case, the crossover circuit **426** may be a resistor. The crossover circuit **426** may also be a more complex circuit with resistive and reactive components. The crossover circuit **426** may also comprise active components such as the radiofrequency switch BF1118.

The crossover circuit **426** also plays a role by enabling azimuthally random orientations between the repeater, the joint box and the joint pin. Each of these components carry couplers that, in the case of more than one antenna segment **173** per coupler, do not possess full azimuthal symmetry. During normal operations, where each antenna segment approximately carries identical fractions of signal power, the relative azimuthal orientations are not relevant. In the case of cable segment failures and/or antenna segment failures, however, some antenna segments receive signal power only dependent on their relative azimuthal orientations. Once the signal has reached the repeater, however, the repeater will re-generate the signal on all available signal lines, independent of the path by which a detector **424** has detected the incoming pulse. In fail-safe mode, this active redistribution functionality is lost, but is partially, *i.e*. passively, restored by the crossover circuit **426.**

Also connected to the antenna segments **173** are the radiofrequency detector diodes **422** and the radiofrequency power amplifiers **420.** The detector diodes are preferably of the Schottky Barrier type such as the HSMS-282x, made by Avago Technologies, San Jose, CA. The rectified detector voltage from the diodes **422** is fed into detectors **424** that comprise analog high-speed comparators that trigger and produce a logic signal in the presence of a radiofrequency pulse at one or more antenna segments **173.** The detectors **424** may preferably comprise additional Schottky diodes that preferably share housings with the detector diodes **422** such that bridge circuits are formed compensating the temperature coefficients of the detector diodes **422.**

Alternatively to the diode detector circuit discussed above, the RF detectors **424** may be realized as monolithic RF detectors. For example, the AD8312 RF detector from Analog Devices, Inc., Norwood, MA, may be a suitable device. Compared to the diode detector, which has a lower threshold in RF power of about -30 dBm, the AD8312 responds to RF levels as low as -45 dBm. Hence the transmission power levels may be lowered by about -15 dB.

The trigger signals from the detectors **424** are logically OR'ed (gate **430**) and trigger a high-speed timing circuit **432.** The timing circuit **432** that may be realized as a monostable multivibrator with a time constant ("tau") of around 0.5 - 1.5 microseconds, inhibits multiple and/or false triggers that may arise either by self-triggering via the power amplifiers **420** or via pulses sent by neighboring repeaters as responses to this repeater. The output from the timing circuit **432** starts a pulse width modulation circuit (PWM) **434** that generates a pulse envelope signal. The pulse envelope signal passes through an AND gate **436,** at which the pulse envelope signal is ANDed with an enable signal from the MPU **410.** The output of the AND gate **436** starts up the power amplifiers **420,** together with the radiofrequency oscillator **438.** Depending on the mode of operation, the pulse envelope may be very short, *i.e.* only a few radiofrequency cycles, or may be of longer duration. The oscillator **438** produces a radiofrequency waveform at the operating frequency, which is close to the frequency the couplers **63** and **64** (and by extension the couplers **61** and **62)** are tuned at. The operating frequency is in the radiofrequency range, and more particularly, in the range 10 MHz - 3 GHz. The action of the high-speed circuit chain, comprised of detector diodes **422,** detectors **424,** gate **430,** timing circuit **432,** PWM circuit **434,** gate **436,** oscillator **438** and power amplifiers **420,** is typically very fast, preferably in the range of about 100 nanoseconds, such that a radiofrequency pulse of defined length and amplitude is generated very shortly after the arrival of the leading edge of an incoming radiofrequency pulse. The operating pulse duration as set by the PWM circuit **434** may also be very short. Therefore, the delay time per repeater is minimized, resulting in very fast pulse propagation through a chain of repeaters. The entire basic repeater action is hardware-based and does not need intervention from the MPU **410** for every pulse. Instead, the MPU **410** controls state changes and monitors the hardware circuit for possible malfunctions.

Optionally, the repeater circuit **230** may also perform a "retiming" function on the pulse trains transmitted. As a retimer, a repeater comprises an internal clock generator whose period defines the granularity of the pulse repetition period. The retimer circuit temporarily holds pulse generation following a received pulse until the next internal clock edge, at which time a pulse the pulse is repeated. The retimer action compensates any short-term timing jitter that may have been introduced during the pulse transmission from other repeaters. It is also possible to mix non-retiming and retiming repeaters and nodes. A basic repeater may be without retiming function, thereby saving the power draw for the internal clock generator. Nodes **250,** on the other hand, may include the retiming functionality within their repeater functionality to compensate for the accumulated pulse timing jitter during the pulse transit through a chain of non-retiming basic repeaters.

The timing circuit **432** provides the necessary functionality to enable coordinated pulse propagation through a chain of repeaters. The repeater circuit by itself may not be aware of or have a preference for a pulse direction. A chain of armed, *i.e.* ready to fire, repeaters, once triggered by a radiofrequency pulse at one of the two ends of the chain, propagates pulses from the triggering end through the entire chain to the other end. The timing circuits **432** delay the re-arming of the repeaters by the time constant "tau", such that the pulse, the repeater's response, as well as the pulses generated downstream from the repeater have died out and cannot cause a false re-triggering event. Therefore, the time constant "tau", the "hold off' time of circuit **432** must be set longer than the worst-case pulse echo arrival time from downstream repeaters. On the other hand, pulses cannot follow each other faster than the "hold off' time constant programmed into the circuit **432,** which therefore limits the highest possible pulse and data rates. Therefore it is desirable to (a) set the "hold off time constant not higher than necessary, and (b) to use line coding schemes that avoid rapid pulse repetitions. A typical "hold off' time constant "tau" for the timing circuit **432** may be one microsecond or less.

Without incoming pulses that trigger the circuit's pulse repeating action, the MPU **410** puts the circuit into low-power state with the switches **236** closed, *i.e.* enabling continuous passive pathways **421.** Upon arrival of a "wake up" pulse, that may be of a longer duration and/or higher intensity than regular pulses, the circuit immediately responds with sending out another copy of a wake-up pulse via all power amplifiers **420,** with the PWM circuit **434** programmed to a long pulse duration (on the order of one or more microseconds) by the MPU **410.** The MPU **410** may monitor the responses from the detectors **424** or may directly measure the outgoing radiofrequency energy, frequency, etc. in order to assess the operational state of the repeater. The MPU **410** may also monitors the battery voltage. In the case of a nearly depleted battery **415,** the outgoing radiofrequency amplitude is weak, and/or the current draw from the power amplifiers causes a significant drop in battery voltage. In either case, the MPU **410** may put the repeater circuit into the fail-safe, "passive" state, wherein the switches **236** remain closed and the AND gate **436** disables the generation of further pulses.

If the circuit passes this initial self-test, the MPU **410** may open the switches **236** and may reprogram the PWM **434** circuit for regular pulse generation. The MPU **410** may also reconfigure the detectors for lower input impedance to provide impedance matching and line terminations for the line stubs **421.** Such re-programming of the detectors may comprise changes in the bias currents for the detector diodes **422.** During normal operations, each diode **422** may be forward-biased via a small d.c. current, of, *e.g.* 10 microamperes. This bias current may be turned off for all or for some diodes **422** to reduce the overall power consumption during low-power sleep states. Furthermore, some detectors **424** may be turned off for low-power sleep as well.

Alternatively to the MPU **410** operating the switches **236,** the switches **236** may be opened (do not conduct) automatically during and/or after the transmission of a pulse, and may close (conduct), after a time delay indicating an idling transmission system. Thus, in a simplified implementation, there may be no need for an MPU **410.** All such circuit variations fall within the scope of the present specification.

While the circuits described above utilized switches **236** that are closed when deactivated ("normally closed"), these circuits can be readily converted into alternate circuits suitable for switches that are open when deactivated ("normally open"). A suitable circuit modification may be the inclusion of one or more delay lines and/or one or more resonant circuits, such as L-C resonant circuits. A suitable delay line may be a section of coaxial cable with a length of one-quarter of the wavelength of the operating frequency. Such a tuned delay line or an equivalent resonant circuit converts - at the operating frequency - an electrical short into an electrical open and vice-versa, preparing the circuit for operation with a normally open or a normally closed switch. All such circuit variations fall within the scope of the present specification. The only requirement for the switch is a defined-open or defined-closed condition when deactivated.

The "parallel" circuit as described may also be implemented by having the parallel circuit not in series with the signal pathway **421,** but from the pathway **421** to signal ground. Such a configuration may have electrically continuous pathways **421** such as also provided by the "T" or "side stub" configuration described earlier. By closing the switch (or alternatively, by opening a switch at the end of a quarter-wavelength tuned delay line), incoming signals at the operating frequency are reflected into the detector(s) **424** without propagating without amplification through the repeater. By combining the various circuit variations with the various possible implementation for switches, delay lines and/or resonant circuits, a plurality of possible circuit implementations exist that all fall within the scope and spirit of the present invention.

The MPU **410** may also monitor the incoming signals immediately following the wake-up for further instructions, the so-called "communications setup" phase, to be discussed further below. Such instructions may cause the circuit to enter various test modes, they may cause the MPU **410** to send out self-identifying information and/or status/health information, or they may cause the circuit to enter different operating or sleep modes. Absent differing instructions, the MPU **410** would typically program the circuit for regular pulse-repeating operation. Since the MPU **410** is generally to slow to decode fast pulse trains that may transport data at speeds in the Mbit/sec range, the MPU-bound instructions may be coded using slower modulations, and in particular using pulse-code modulation (PCM) that is easy to decode with low-power, low-speed MPUs. In slow-speed PCM mode and utilizing the shift register **412,** the MPU **410** can receive commands and can transmit information such as identifiers, health/error status information, and/or sensor readings (*e.g*. voltage, temperature). The shift register **412** may also be a universal synchronous/asynchronous receiver/transmitter (USART) circuit. Furthermore, the MPU **410** may store additional information pertaining to the repeater it is installed in, and/or to the pipe string component the repeater is installed in. Such information may be written to the MPUs after repeater installation and may be read out afterwards at any given time. In this respect, the repeater circuitry functions similar to an RF-ID circuit. Upon exiting low-speed PCM mode and entering high-speed pulse-position modulation (PPM) mode, the MPU **410** may cease to decode the data stream. The MPU **410** and/or dedicated circuitry, however, may continue to monitor the pulse stream as described below.

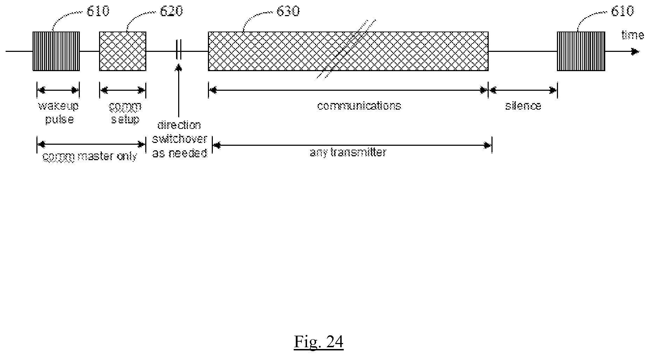

Typically, the MPU **410** and/or dedicated circuitry may monitor the operation of the repeater or node circuitry intermittently or continuously. During normal operations, a communications sequence is of limited duration, *e.g*. 10-100 milliseconds (see also FIG. 24), followed by a pause in pulsing that causes the circuit to re-enter a low-power state. If the circuit fails to enter a low-power state within a pre-determined time period, *i.e.* is uncontrolled, continuously pulsing, the MPU **410** disables the circuit and forces a low-power, fail-safe state by controlling AND gate 436, wherein the pulse generation is disabled and the circuit passively passes signals with pathways **421** and switches **236.** Furthermore, the MPU **410** and/or dedicated circuitry may count the number of pulses via its input from the PWM circuit **434** and may compare that number to the maximum number of pulses generated by the pulse modulation scheme in use in a given time period. An excess number of pulses may indicate a runaway condition, again causing the MPU **410** and/or dedicated circuitry to disable further pulse generation and to force the fail-safe condition.

The MPU **410** and/or dedicated circuitry may monitor the operation of the repeater circuit **230** and/or the node circuit **250** in a plurality of ways. For example, the MPU **410** may monitor the power supply voltage, *e.g*. the battery voltage(s), under low-load conditions, it may monitor the power supply voltage under high-load conditions and it may compute the internal battery resistance(s) from these measurements. The MPU **410** may attempt to de-passivate the battery or batteries **415** by temporarily drawing high current from the battery or batteries **415.** The MPU **410** and/or dedicated circuitry may compare the measured voltages with pre-defined voltage limits, above and below correct repeater or node action may not be possible. Upon detecting such an over- or under-voltage condition, the MPU **410** and/or dedicated circuitry may disable the repeater **230** or node **250** by disabling further pulse generation and forcing a fail-safe mode. The MPU **410** and/or dedicated circuitry may keep a history log of measured voltages to deduce the health of the repeater circuitry.

The MPU **410** and/or dedicated circuitry may monitor the ambient temperature and may keep a history log of measured temperatures. The MPU **410** and/or dedicated circuitry may factor in such temperature measurements into the assessment of the battery condition.

The MPU **410** and/or dedicated circuitry may measure the current draw from the power supply and may compare the measured current draw to current limits typical for the pulse modulation scheme in use. Upon detecting an overcurrent condition, the MPU **410** and/or dedicated circuitry may disable the repeater or node by disabling further pulse generation and forcing a fail-safe mode. The MPU **410** and/or dedicated circuitry may keep a history log of measured currents to deduce the health of the repeater circuitry.

The MPU **410** and/or dedicated circuitry may also integrate the measured current draw over time to arrive at an estimate of the electrical charge drawn from the battery/batteries over time. The MPU **410** and/or dedicated circuitry may estimate the remaining charge in the battery/batteries by combining voltage, temperature and current measurements and their logs. The MPU **410** and/or dedicated circuitry may monitor trends in voltage and current to further refine such an estimate of remaining charge. The MPU **410** may separately tally the accumulated times spent in various operating states and may factor in such times together with known or measured current draws of such states into the estimate of remaining charge. The MPU **410** may tally the number of pulses transmitted and may factor in such a number together with a known or measured current draw during pulsing into the estimate of remaining charge. The MPU **410** and/or dedicated circuitry may estimate the remaining life time of the battery/batteries from such estimates of remaining charge.

The repeater **230** and/or node **250** may report its "health" state together with estimates of battery conditions and remaining lifetimes if so prompted. Such a report may be integrated in the "roll call" communication sequence described further below. Such a report may also be produced upon special interrogation, either by an isolated repeater or node, by a repeater or node mounted in pipe joints, by a small number or repeaters mounted in a "stand" of pipe joints or by repeaters or nodes within a pipe string. Such special-purpose communication sequences are described further below. Repeaters and/or nodes may also be placed in special test modes by such special-communication sequences.

Exiting a fail-safe state may depend on a number of factors. Upon detecting a weak battery **415** would normally cause the MPU **410** and/or dedicated circuitry to make the fail-state permanent, since battery recovery is unlikely. For other fail-safe conditions, the MPU **410** and/or dedicated circuitry may attempt to re-enable the repeater after a pre-determined time delay, *e.g.* one second, and only for a limited number of times. That way, transient problems can be cleared up and the affected repeater can re-enter service, while persistent problems cause permanent fail-safe state for the affected repeater or node.

The circuit shown in FIG. 13 and following figures is typically powered by a battery **415.** Battery **415** may comprise primary cells or may be of the rechargeable type. More than one cell may be used in parallel for higher battery charges and/or may be used in series for higher supply voltages.

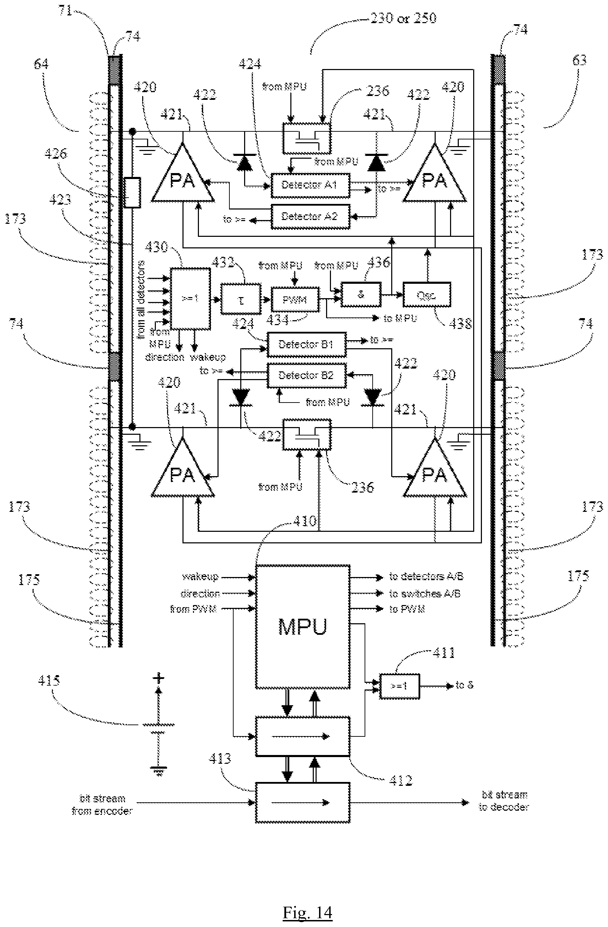

FIG. 14 shows in exemplary fashion a modified implementation of the repeater circuit. Whereas the repeater circuit shown in FIG. 13 and described above is essentially "blind" to the direction of data communications, the example circuit of FIG. 14 is able to identify the direction from which pulses are being received. The circuit is moderately more complex than that of FIG. 13 by the inclusion of additional detectors **424.** Furthermore, the detectors **424** can selectively enable and disable the power amplifiers **420** to cause pulses only to be re-transmitted in their original propagation direction. This functionality requires the radiofrequency switches **424** to open during pulse generation. The main advantage of this added functionality is a reduced power draw, since only one-half of the power amplifiers are active during normal pulse generation. In contrast, the repeater circuit of FIG. 13 is not aware of the pulse propagation direction and therefore must repeat all pulses in both directions, either through enabling all power amplifiers **420** or by keeping the switches **236** closed during pulse generation.

In alternate implementations, fewer detectors **424** may be required. In this case, the MPU **410** may receive instructions during the "communication setup" phase as to which power amplifiers **420** are to be used during the current transmission period.

Also shown in FIG. 14 is additional circuitry that may be included if the repeater circuit is used as the radiofrequency (RF) frontend **540** of a communications modem. The need for such modems arises wherever high-speed data stream are generated or are consumed, for instance, in the surface interface unit **210** (FIG. 1) and in the downhole (BHA) interface **240** (FIG. 1). Also, at any intermediate node that requires or that generates data in more than very small quantities, modems may be used. The additional shift register **413** exchanges data with the primary shift register **412** and with the MPU **410.** The shift register **413** accepts serial data streams from modem sub-units used for data transmission (to be discussed below) and sends serial data streams to modem sub-units used for data reception (also to be discussed below) and makes the repeater circuit suitable as a general-purpose frontend building block for modem designs. The shift register **413** may also be a universal synchronous/asynchronous receiver/transmitter (USART) circuit.

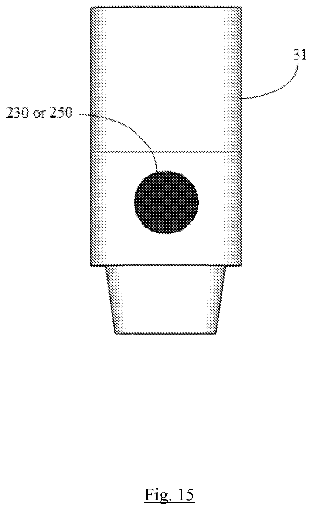

The method of housing repeaters in a rotary connection is not the only possible method. FIG. 15 shows conceptually a tool joint, and in particular the box end **31** of a pipe joint, with a "button" repeater **230** or a "button" node **250** installed. The "button" contains the repeater electronics and a battery, is hermetically sealed against the outside and is screwed into a cavity machined into the tool joint. Electrical connections inside the tool joint connect the repeater to the box coupler installed inside the box and to the cable running through the tool joint (cables and coupler are not shown in FIG. 15).

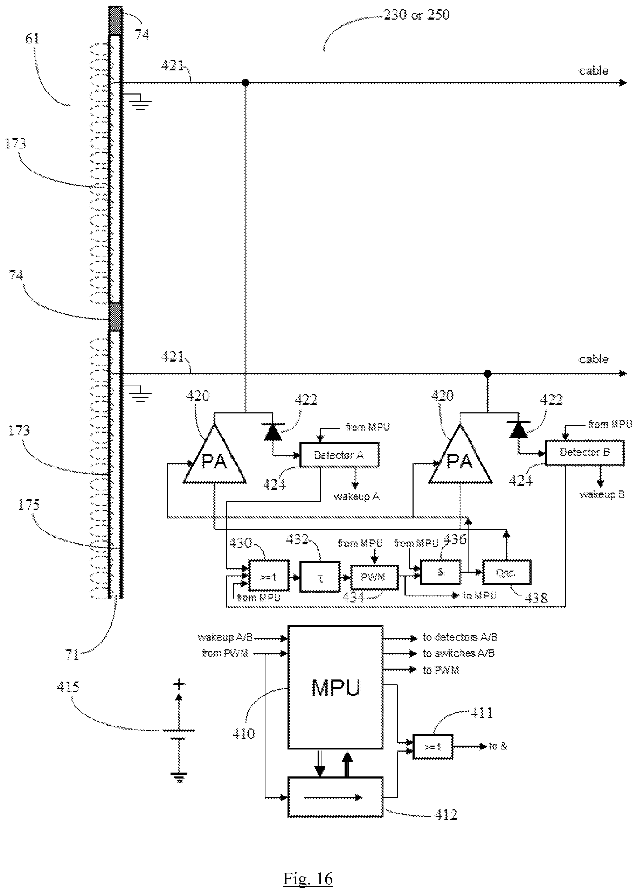

FIG. 16 shows conceptually a repeater circuit suitable for the "button" configuration. In this case, the button is electrically connected to one or more (as shown) antenna segments **173** of the box coupler **61.** As shown, in this example the "T" configuration has been realized without switches and with direct connections between coupler segments and cable segments. Hence some repeater functionality described above is not applicable to this circuit, however, the rest of the circuit is self-explanatory given the descriptions above.

From the foregoing description it should have become apparent to those skilled in the art that the repeater or RF frontend circuits described implement simple and hence robust methods for transmitting data over arbitrary distances at high data rates with low power requirements for each repeater. The circuits feature the ability to enter low-power states in the absence of communications, the ability to wake up within microseconds to perform communications tasks and draws little battery power even when fully operating. In addition, the circuits provide fail-safe functionality, enabling communications even in the presence of failed repeaters. Therefore these circuits are eminently suited for deployment in remote and hostile environments such as underground, where the circuits have to be miniaturized and are not easily accessible, *e.g*. to perform repairs and/or to change batteries.

Another aspect of this remote-deployable functionality is the use of specific modulation schemes for transporting data over the communication system that require only minimal functionality in terms of signal encoding and decoding and signal modulating and demodulating in the repeaters. Instead, such coding and modulating functionality may be bundled into the end terminals, *i.e*. the surface interface, the downhole interface, and (if present) the nodes. The significant space and power limits applicable to the repeaters do not exist or can be relaxed for the interfaces and the nodes. In the following, modulation and coding schemes will be disclosed that exhibit the property of requiring only simple and low-powered repeaters for transmitting data at high speeds using short pulses of radiofrequency energy.

An example of a pulse-code modulation (PCM) line code suitable for the data transmission system described above is shown in FIG. 17a. A sequence of pulses, where each pulse may be a short burst of a high-frequency carrier signal, encodes a sequence of bits. Regularly-spaced "clock" pulses ("C") establish a timing pattern and "data" pulses ("D") represent the information transmitted. The presence or absence of a particular D pulse represents a logical "0" or a "1" or vice versa, *i.e.* a pair of one C pulse and one D pulse carries 1 bit of information. As shown in FIG. 17b, the data rate may be increased by changing the ratio of C to D pulses such that a fixed number of more than one D pulses follows each C pulse. In the extreme of self-clocking line codes, only D pulses are used. In the case of PCM line coding, the maximally achievable data rate is primarily given by the "hold off time constant "tau" previously described. If the "hold off' time has been set, for example, to 1 microsecond, pulses may be repeated not faster than, *e.g.* 1.5 microseconds. Given the coding scheme of FIG. 17a, one bit is transmitted for every two pulses (3 microseconds in this example), resulting in a raw data rate of 333 kbit/sec. Given the coding scheme of FIG. 17b, three bits are transmitted for every 4 pulses (6 microseconds) at a raw data rate of 500 kbit/sec. The PCM codes are energetically relatively inefficient as they require at least one pulse per bit. In contrast, the PPM (pulse position modulation) code(s) described below transmit multiple bits per pulse.

The non-return-to-zero (NRZ) modulation method often used on asynchronous serial lines can also be mapped into the PCM scheme. The serial NRZ format consists of a start bit, a variable number of data bits, an optional parity bit, followed by 1, 1.5 or 2 stop bits. Mapped to PCM, the start bit is transmitted as a "C" pulse, the data bits and the parity bit are expressed as "D" pulses, and the stop bits are expressed as variable-length silence (no pulses transmitted). The advantage of using NRZ-mapped-to-PCM is the simplicity by which it can be encoded and decoded, since many MPUs already contain USART peripherals suitable for the task. For the present discussion, NRZ-mapped-to-PCM is lumped with the other PCM codes under the umbrella term "PCM".

The primary purposes of PCM coding in the present system are (a) communication with slow-speed MPUs, such as those deployed in the repeaters, for system maintenance and for communication setup, and (b) as fallback, slow-speed codes in case of system instabilities such as high pulse jitter, that preclude the use of more efficient codes such as PPM. The fallback, slow-speed communication modes are dynamically selected during communication setup in case the communication modems detect a high bit error rate (BER) when using more efficient codes, or may be selected manually by a system operator. As described below, the BER may be inferred during the decoding step of an error-correcting block code, *e.g.* a Reed-Solomon code.

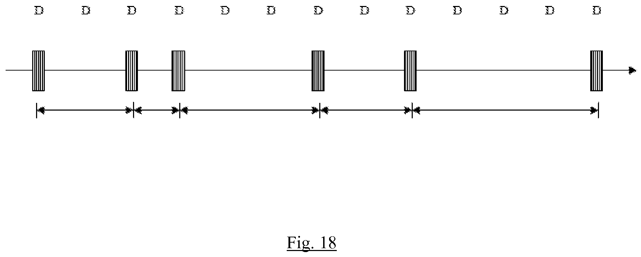

FIG. 18 illustrates a pulse-position modulation (PPM) code suitable for the data transmission system described above. As in PCM, a sequence of pulses, where each pulse may be a short burst of a high-frequency carrier signal, encodes a sequence of bits. Unlike in PCM, the information is encoded in the distance between pulses, more specifically in the time delays between the rising edges of the radiofrequency bursts. Hence PPM is sometimes called pulse-delay-modulation (PDM). For the present discussion, PPM and PDM are synonymous. The number of bits that can be encoded in such a way is limited by: (a) the minimum pulse repetition time, (b) the maximum pulse repetition time, and (c) the uncertainty in quantifying the information-encoding delay. The latter limitation is given by the random, short term timing jitter between pulses. The electronic circuits of FIGS. 13, 14, and 16 have been designed to minimize that short-term jitter to enable very high data rates with relatively simple repeater electronics. The implementation of PPM coding by means of group codes will be described below.

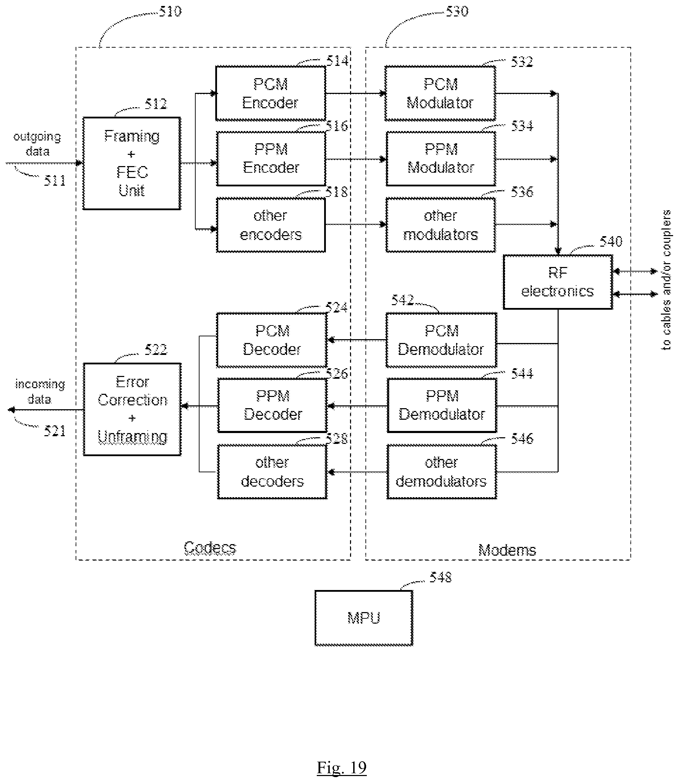

FIG. 19 shows conceptually a partial block diagram for a modem suitable for the data transmission system described above. Only those functional blocks relevant for the current discussion have been included in FIG. 19, since the additionally required, and rather general processing steps of data transmission via modems are well known in the art. The functional units under consideration can be roughly grouped into codecs (coder/decoders) **510** and modems (modulator/demodulators) **530.** Obviously the term "modem" is overloaded as it applies to the device as a whole, but also to the functional units performing modulation and demodulation tasks. A digital outgoing data stream **511** is to be transmitted through the data transmission system and is to be converted into an identical incoming data stream **521** at a different location along the data transmission system. Consequently, each location (surface system, downhole BHA system, along-string nodes) that have incoming and/or outgoing data streams require each at least one modem.

As shown in FIG. 19, the codec portion **510** comprises functional units for the modulation methods used, in particular PCM encoders **514** and PCM decoders **524,** PPM encoders **516** and PPM decoders **526,** and other coders **518** and decoders **528** and other modulators **536** and demodulators **546** as needed. The routing through the correct encoders, modulators, demodulators and decoders is performed by a microprocessor unit (MPU) **548.** Coding and modulation methods may be selected dynamically based on the operating mode of the telemetry system, *e.g*. communications setup, maintenance, testing, low-speed operation, high-speed operation, standby, "limp" mode (a compromised system allows only slow-speed communications traffic), and so on. Coding and modulation may also be selected statically by human operator intervention, which may occur locally or remotely, or by programming.

The first step shown in formatting the outgoing data stream is "framing" **512,** wherein the data is divided into fixed-size chunks; and forward error correction (FEC). In the FEC step, to each frame parity information is added, which enables the receiver to recover correct information from corrupted frames. This error-correction procedure, together with data unframing is performed in block **522.** At any given time, one of several possible paths through the codec and modem section is selected. The selected modulator **532, 534,** or **536** drives the radiofrequency (RF) frontend electronics **540.** In the case of a modem for an in-string node, the RF frontend circuit is essentially identical to that shown in FIG. 14. For the end terminals, the circuit can be trivially derived from FIG. 14 by omitting the second coupler, the circuitry associated with the second coupler such as power amplifiers **420,** diodes **422** and detector(s) **424,** and omitting the switches **236.** The RF frontend interfaces **540,** depending on the particular implementation, interface with cables and/or with couplers by sending and receiving radiofrequency pulses. In the following, selected functional units of FIG. 19 will be discussed. Since methods for PCM coding are well known in the art, the operation of elements **514, 532, 542,** and **524** are assumed to be well understood by those skilled in the art and discussion will focus on the functional units in the PPM data pathways.

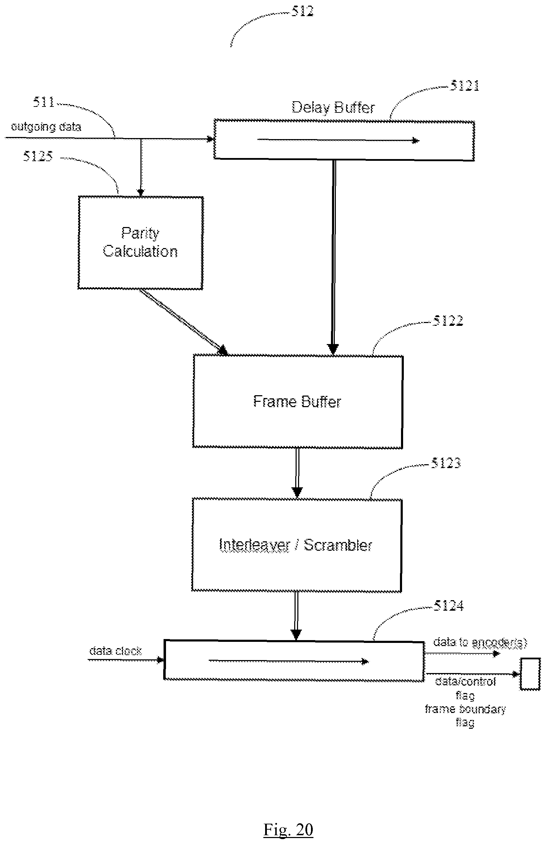

The first functional unit to be discussed is the Framing/FEC unit **512,** shown conceptually in simplified form in FIG. 20. The outgoing data stream passes through a delay buffer **5121** and is divided into fixed-frame chunks and is temporarily stored in the frame buffer **5122.** The parity calculation block **5125** performs a Reed-Solomon encoding calculation and adds the resulting parity data to the frame buffer **5122.** The symbol size is customarily chosen to be 8 bit (1 byte), which limits the size of the largest frame to 255 bytes. It has been found to be advantageous to pre-define various frame sizes from a few bytes to 255 bytes. Correspondingly, the Reed-Solomon parity calculation adds a variable number of parity bytes. As an example, it had been found advantageous to define the largest data chunk size to be 246 bytes, to which 8 parity bytes are added, for a total of 254 bytes frame size. The frame buffer is followed by the Interleaver/Scrambler **5123** that performs data re-sorting within a frame. This procedure helps with data recovery of frames corrupted by burst errors. The resulting frame now contains only data, albeit encoded in a redundant fashion such that the original data may be recovered from randomly corrupted received frames. The scrambled frame is optionally serialized via a shift register **5124** (serialization depends on the particulars of the hardware implementation) and passed to the encoder(s). The interleaving and de-interleaving steps may be skipped, e.g. when communicating with basic repeaters and/or simple nodes that lack the hardware and/or the processing power to perform the necessary calculations in real time.

The present discussion presents Reed-Solomon codes as the preferred block codes to be used. The reason is that Reed-Solomon codes are the most efficient block codes, inasmuch as they offer the largest Hamming distances given a pre-defined number of symbols to be encoded and given a pre-defined number of parity symbols available. Clearly, other block codes may be used as well and fall within the scope of the invention. The block coding and decoding steps may be skipped, e.g. when communicating with basic repeaters and/or simple nodes that lack the hardware and/or the processing power to perform the necessary calculations in real time. A good reference for methods and implementations of Reed-Solomon encoders and error detection and correction circuits can be found in: "Reed-Solomon error correction", by C.K.P. Clarke, R&D White Paper WHP 031, British Broadcasting Corporation, July 2002.

The present invention presents run-length limited (RLL) codes and particularly EMF, EMFPlus and EMFPlus2 (to be discussed below) as the preferred group codes to be used. Group codes and group code recording (GCR) are more efficient in terms of channel bandwidth usage than non-group codes. Clearly, other group codes may be used as well and fall within the scope of the invention. As shown in this discussion, block codes and group codes may be used together for high channel efficiency and high error correction capability. The group coding and decoding steps may be skipped, *e.g*. when communicating with basic repeaters and/or simple nodes that lack the hardware and/or the processing power to perform the necessary calculations in real time.

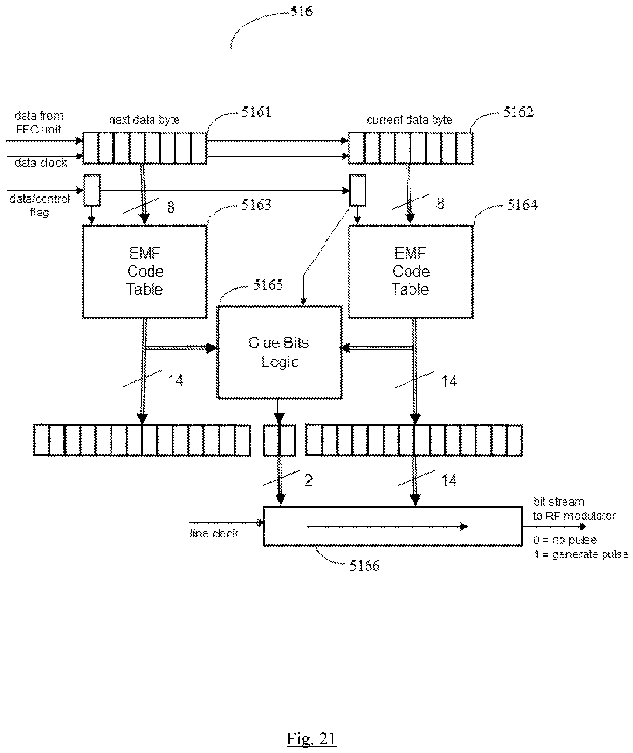

The PPM **516** encoder is shown in FIG 21. Its logic is partially based on the EMF and EMFPlus coding methods for the Compact Disk (CD) and DVD, respectively. Details on EMF and EMFPlus can be found in "Principles of Digital Audio", 6th Ed., by Ken C. Pohlmann, McGraw-Hill, New York, 2011, Ch. 7 and 8. In both EMF and EMFPlus, an 8-bit word (corresponding to one Reed-Solomon symbol) is converted into a 14-bit word using one or more run-length-limited (RLL 2,10) code tables. The RLL parameter pair (2,10) signals that the minimum distance between any two consecutive "0/1" or "1/0" transitions in the encoded bit stream is two (2) bits and the maximum distance between any two consecutive "0/1" or "1/0" transitions is ten (10) bits. Since no input data can cause a prolonged encoded bit stream without pulses, all RLL-based modulation methods are self-clocking.

In EMF, two 14-bit code words are separated by three (3) bits; in EMFPlus, two 14-bit code words are separated by two (2) bits. Hence it takes 17 line clock cycles to output an 8-bit input byte using EFM, and 16 line clock cycles using EMFPlus. Hence EMFPlus is about 6% more efficient than EMF, at the expense of significantly more complex encoding and decoding involving a state machine and multiple code tables. In the context of the present invention it has been found that by modifying the EMF code table and by relaxing the low-frequency control requirement necessary for CD and DVD, but not for the purposes of the present invention, the simplicity of EMF and the efficiency of EMFPlus can be combined. The novel coding method may be called "EMFPlus2".

As shown in FIG. 21, two serial shift registers **5161** and **5162** buffer two bytes from the Framing/FEC unit **512.** These two bytes are encoded to 14 bits each using the EMF Code Tables **5163** and **5164.** The code tables have been optimized for the data transmission system described and are not identical to the code tables used in CD and/or DVD coding. From the two 14-bit code words, a glue bits logic unit **5165** computes two "glue" bits. The "glue" bits encode no information, but maintain the (2,10) requirement imposed by the RLL scheme. Finally, every 16-bit (14+2) word is optionally serialized and passed on to the PPM modulator **534** by shift register **5166.** An exception to the (2,10) rule are certain synchronization patterns that are embedded in the output stream by the encoder(s) to signal the boundaries between frames. These patterns purposefully violate the (2,10) rule with 11 or 12 time periods between pulses, which makes the synchronization patterns easy to detect by the decoder(s).

Obviously, in place of EMFPlus2, the classical EMF method or the EMFPlus method may be used. In EMF, three (3) "glue" bits are necessary between 14-bit code words to ensure the selected RLL condition, thereby reducing coding efficiency and data throughput. In EMFPlus, only two (2) "glue" bits are necessary; however, encoding and decoding are made more complicated by the use of multiple translation tables **5164.** The selection of the active translation table **5164** is done by a state machine, whose state depends on the past coded words. Therefore, random errors occurring during data transmission may spread to following code words as well, making prompt recovery from single transmission errors more difficult.

In the example implementation, the PPM modulator **534** is trivial. The line clock timing is already established by the serial data clock and the PPM modulation is reduced to the operation of producing an RF pulse for every "1" in the code bit stream and a pause for every "0" in the code word bit stream. Following the example given above, for a "hold off' time constant "tau" of 1 microsecond, pulses may be repeated no faster than, *e.g.* 1.5 microseconds. From the RLL(2,10) scheme immediately follows the highest possible line clock frequency of 2 MHz with a period of 0.5 microseconds. Hence it takes 16 x 0.5 = 8 microseconds to transmit a 1-byte symbol, resulting in a raw line data rate of 1 Mbit/sec. This is better than the PCM methods discussed above by factors of 2 and 3, while PPM also offers much improved energy efficiency due to the sparser RF pulsing. For the example calculation given above, the PPM mode with a data rate of 1 Mbit/sec requires, on average, about one pulse every 2 microseconds, or 0.5 pulses/bit. To compare, the simple PCM code of FIG 17a consumes two (2) pulses per bit. Given the simplicity of the PPM modulator, the serial code stream can be passed without modification to the RF electronics **540** that performs the last step in the modulation chain.

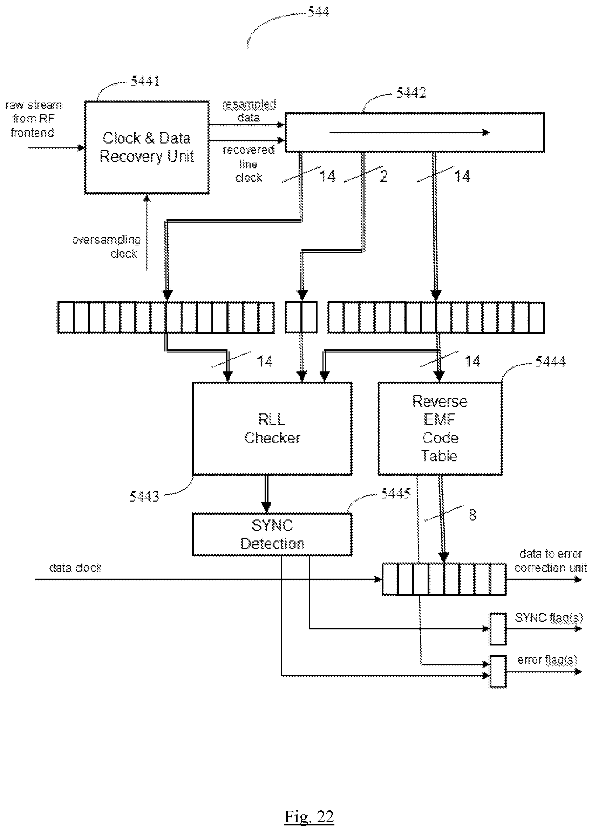

The functions of the PPM demodulator **544** and PPM decoder **526** are best understood together, using the simplified block diagram of FIG. 22. A clock and data recovery (CDR) unit **5441** oversamples the raw pulse envelopes detected by the RF frontend **540.** The CDR typically contains a phase-locked loop (PLL) that recovers the transmission clock embedded in the pulse stream (the pulse stream is self-clocking as discussed above). The PLL tracks slow clock drifts that may be induced, for example, by temperature changes in the transmitter's clock circuitry. The CDR outputs a re-sampled version of the raw line code data stream, together with the restored line clock to shift register **5442.** The shift register **5442** outputs 14 bits at a time to a reverse-look up EMF code table **5444** that emits a 8-bit symbol. In parallel, an RLL checker circuit **5443** verifies that the RLL (2,10) condition is met in the input stream; otherwise an error flag is set. Exceptions to this rule are certain synchronization patterns that are embedded in the input stream by the encoder(s) to signal the boundaries between frames. These patterns purposefully violate the (2,10) rule with 11 or 12 time periods without a pulse, which makes them easy to detect in the input stream using SYNC detection circuit **5445.** The decoded 8-bit symbol, together with synchronization and error flags, is passed to the error correction and unframing unit **522.**

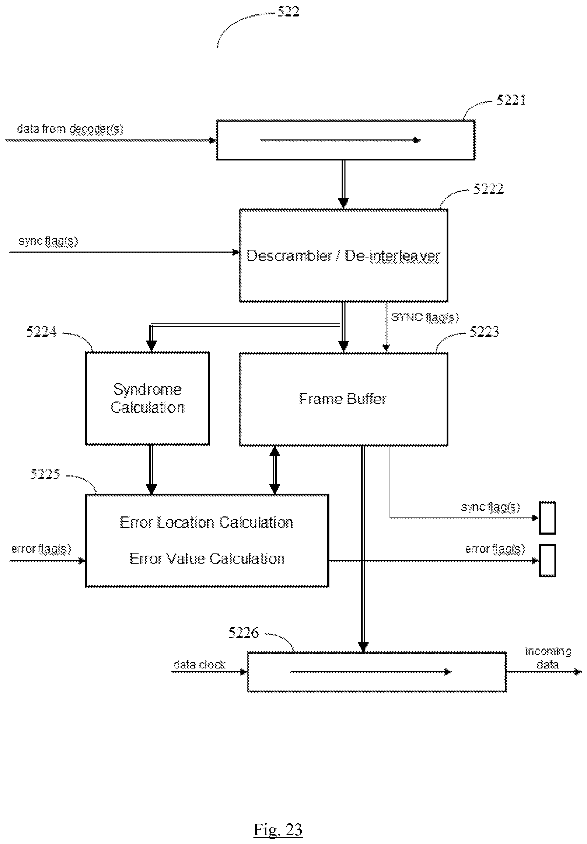

FIG. 23 shows a very simplified block diagram of the error correction and unframing unit **522.** Decoded data, *i.e.* the symbol stream, is optionally fed into a de-serializing shift register **5221,** from which the data enters, in the case of scrambled/interleaved input data, the descrambler/de-interleaver **5222** that performs the reverse operation of the scrambler/interleaver **5123** (FIG. 20). The descrambled data needs to be temporarily stored in a frame buffer **5223,** while a syndrome calculation unit **5224** performs a series of polynomial divisions to determine the syndrome values for the buffered data. Correct data is characterized by all syndromes to be the null symbol ("0"). If not all syndromes are 0, the Reed-Solomon error correction block **5225** calculates: (a) the most probable error locations on a symbol basis, and (b) the correct symbols. For the example given with 8 parity symbols embedded in a 254-byte frame, up to 4 error locations and up to 4 error values can be computed, *i.e.* up to 4 corrupted symbols at *a priori* unknown locations within the 254-byte frame may be corrected. Assuming the corrupted symbols are due to random bit errors, 4 bad bits in a 8 x 254 = 2032 bit frame are tolerable. This corresponds to a maximally acceptable bit error rate (BER) in this example of 0.197%.

The correction block **5225** performs the required modifications to the data in frame buffer **5223** and then releases the data to a shift register **5226** for output. Exempt from this procedure are the synchronization symbols that reside outside the codebook space and hence do not correspond to a symbol in the Reed-Solomon symbol space, either. Instead, the synchronization symbols control the unframing process by signaling frame bounds to the descrambler **5222** and the frame buffer **5223.**

Another output of the error correction and unframing unit **522** is an estimate of the bit error rate (BER) of the communications channel. Each non-zero syndrome indicates a bad symbol received due to at least one bit error. Typically, the rate of symbol errors should be very low, but does not have to be zero, to indicate a correctly operating communications system. The MPU **548** (FIG. 19) may continuously monitor the symbol error rate detected by the error correction unit **522** and may take corrective action should the symbol error rate reach unacceptably high levels. In such cases, the MPU **548** may switch to a different encoding scheme and/or to a slower data rate. In most cases, hardware problems result in excessive pulse jitter that affect the most the PPM modes with the highest data rates. Hence, switching to PCM and/or stepping down the data rate may alleviate the problem. The new communication parameters are broadcast over the network using the "communication setup" phase described below.

Note that throughout the present description the roles of the downhole (BHA) interface and the roles of the surface interface are interchangeable. Either interface may assume the role of a "communications master". In addition, there may be "intelligent" nodes arranged along the pipe string that can also assume the role of a communications master. Various communication links may be established between the downhole interface and such an intelligent node, between the intelligent nodes themselves, and between intelligent nodes and the surface interface according to the invention. Such multiple communications may proceed sequentially or may proceed concurrently. This feature is particularly useful in drilling operations, since the drill string and therefore the communications system are dynamically configured. During normal drilling operations, the surface control system is periodically disconnected to allow for the addition of additional pipe joints to the drill string. During tripping operations ("tripping into the hole" and "pulling out of the hole") the surface control system may be disconnected for quite some time from the pipe string. It is also possible to let a pipe string "hang in the slips", i.e. fix the topmost pipe joint at the surface without connecting the top of this topmost pipe joint. Typically, in all these situations the BHA instrumentation cannot be powered hydraulically by means of the mud flow, but instead is powered by batteries, as are most components of the data transmission system. Therefore, the data transmission system remains fully operational even without connectivity at the surface. The downhole (BHA) interface or an in-string node may assume control of the data communications system and may monitor and/or communicate with the components of the data transmission system. A particular advantage of this functionality is the continuous monitoring of the hole, the formation surrounding it and the fluids contained in the borehole and the formation. Data may be gathered in an uninterrupted fashion and independent of the construction of the well. If at a later point in time the surface control system is re-connected data gathered during the time period of no connectivity with the surface system may be uploaded. It should be noted that throughout this description the terms "upload" and "download" do not refer to a particular physical direction of data flow.

An exemplary communications cycle is conceptually shown in the timing diagram of FIG. 24. The designated "communications master", which may be, for instance, the surface interface or may be the downhole interface, initiates communications by transmitting a "wakeup" pulse **610** that progresses through the entire communications chain by means of pulse repeating as described above. The "wakeup" pulse **610** serves to transition the repeaters, nodes, modem, etc. from a low-power state to a state of higher alertness. All such interfaces may perform self-checks at this time. The "wakeup" pulse **610** may be of longer duration than ordinary pulses or may have other features that distinguish it from other pulses such as its frequency, its phase, its shape and/or its amplitude. The wakeup pulse **610** may also be implemented as a series of pulses, *e.g.* a rapid pulse train that purposefully violates the minimum pulse repetition time of the PPM RLL scheme chosen. What follows is a "communications setup" phase **620** in which the communications master sets communications parameters such as modulation method, data rate, pulse repetition rate, mode of communications cycle, etc. The setup phase **620** may be typically transmitted as a single frame. In order to be recognizable by simple repeaters or nodes, the setup phase pulses are typically transmitted in PCM (which may include NRZ-mapped-to-PCM as described above). Depending on the communications mode chosen, a directional switchover phase may be required to clear the entire transmission line of pulses. Such a switchover may take typically 0.1 ms - 1 ms. Next follows the chosen communication, in which typically a series of data frames **630** are transmitted based on the communications protocol chosen by the communications master. After such data transmission, the line becomes silent to achieve communications switchover as needed and to signal the end of the current communications cycle. Repeaters, nodes, etc. may enter low-power modes at this point. As shown in FIG. 24, the next cycle is started by another wakeup pulse **610.** The data frames **630** are optional; for instance, to initiate resets or self-tests or mode changes, no data frames beyond the frame **620** may be needed.

Another purpose of the "communication setup" phase/frame **620** may be the system-wide distribution of time. The current time may be expressed as the number of "ticks" (a tick may be 1 millisecond) since a pre-defined date and time in the past. Due to the very fast pulse propagation in the present communications system, all nodes that require real-time information, can be synchronized to within a single "tick" by including the current time as a multibyte word in frame **620.** Therefore, it may be advantageous to let the communications master also be the "time master". Alternatively, the time information may be transmitted within a data frame **630.** Since the surface system has access to the most accurate clock sources, *e.g*. through a rig network or through a Global Positioning System (GPS) interface, it may be advantageous for the communications master to be the surface interface. For most applications, an accuracy to within 1 millisecond is sufficient. Sub-millisecond accuracy may be achieved by considering the propagation delay from the communications master to the receiving node as described below.

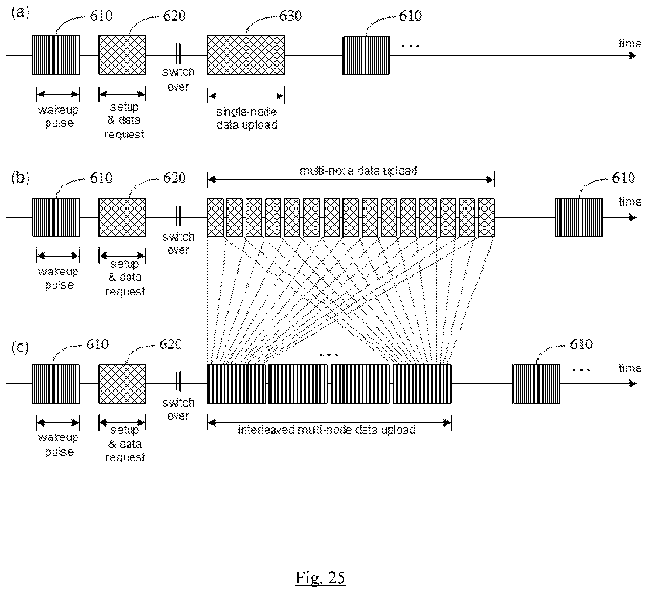

In FIGS. 25a - 25c, various possible communications cycles for data uploads are depicted based on the timing diagram of FIG. 24. Common to the diagrams 25a-25c is the purpose of "uploading" data from a node or from a plurality of nodes to a data receiver, which may, for instance, be the surface interface or the downhole interface. FIG. 25a is the simplest example, in which a single node uploads data by transmitting multiple data frames **630** as directed during the communications setup phase **620.** Data from another node may be uploaded in another communications cycle, and so on.

FIGS. 25b and 25c depict possibilities for the implementation of multi-node uploads. In a communication system comprising many nodes that gather data, it is clearly advantageous to use as few as possible communication cycles to get as much data as possible. This is particularly true for the case of distributed sensors that generate only small amounts of data and/or whose data need to be requested only infrequently. As shown in FIG. 25b, in a multi-node upload cycle, the transmitting nodes take turns to transmit their data frames within the allocated sequence period following the direction switchover. For this function to perform correctly, the nodes should be able to at least recognize the gaps in communications following the upload window of one node. It is also desirable that the nodes have been allocated serial numbers in order to follow a fixed schedule for taking turns in transmitting data frames.

One implementation of allocating a serial number takes advantage of the physical interfaces of repeaters and nodes. As discussed, the "parallel" configurations comprise electronic switches **236** that break the transmission line **300** at the points of active and properly functioning repeaters and/or nodes. Thus, by entering an "enumeration" sequence as indicated in the setup phase **620,** the repeaters and/or nodes are instructed: (a) to keep the switches **236** open during the multi-node upload phase, and (b) to respond to an incoming serial-number data frame by forwarding a serial-number data frame containing an incremented serial number. The repeater or node stores the received serial number as its own dynamically allocated serial number and uses this number to find its allocated slot in subsequent multi-node upload sequences. Alternatively, the repeater or node may allocate for itself a range of consecutive serial numbers by forwarding the next higher serial number. The communications master initiates the dynamic serial number assignment (DSNA) process by assigning a range of serial numbers to itself, starting with the number 0, and by forwarding a frame with the next free serial number. Upon reception, the repeater or node physically next in line assigns the incoming number to itself, increments the serial number by at least 1, and forwards a new frame with the new number to the next repeater/node in line. The DSNA process steps repeat themselves until all functioning repeaters and/or nodes that require such serial numbering have been assigned dynamic serial numbers. Typically, DSNA may happen after pipe string components have been added or removed or at any other time after the configuration of the network may have changed. Since the DSNA may require MPU intervention, it may be carried out in PCM mode to accommodate the MPU's slower speed.

After DSNA has been performed, all nodes that require sub-millisecond time resolution may adjust their internal clocks by estimating the latency time between the transmission of current time information and its reception at a particular node. Since typically every repeater and every node has been assigned a number, the total distance between the time master and a node may be estimated by multiplying the node's DSNA number by an average latency time per repeater distance. This "hop" latency time is nearly constant as it comprises (a) cable length divided by cable speed, and (b) repeater response latency time. These parameters are well known in advance. By adding the estimated time transmission latency time to the received time information, a node may achieve sub-millisecond accuracy of its internal clock without the need for expensive high-precision downhole clocks.

In addition to dynamic repeater/node serial numbers assigned by DSNA, it is also advantageous to store static, unique serial numbers in each repeater and/or node. From the static serial numbers, each repeater/node's manufacturing and usage history may be looked up. In another example of single-node and/or multi-node data uploads, in the so-called "roll call" cycle, each repeater and/or node responds to a "roll call" communications setup/request by uploading its static and dynamic serial numbers, its internal status and health state (such as battery voltage) and a computed estimate of the consumed battery charge, respectively of the estimated remaining battery lifetime, based on a number of known, measured and/or estimated parameters as described above. Non-functional repeaters/nodes do not respond to a "roll call" request, a condition the communications master can detect and flag as a hidden system problem by comparing the history of all roll calls during the present deployment. Inspection of such a history log can reveal at once suddenly missing, *i.e.* gone bad, repeaters and nodes.

FIG. 25c details another possible multi-node upload sequence. Compared to FIG. 25b, where nodes upload complete data frames, the upload in FIG. 25c proceeds in an interleaved fashion as indicated by the crossed lines linking FIGS. 25b and 25c. Although the same data as in FIG. 25b may be uploaded, the sequence is such that the nodes take turns (in the order of their dynamic serial numbers) in contributing small chunks of data that are being aggregated in frames. The purpose of interleaved uploads is higher transmission efficiency by forming the largest possible data frames and therefore idling the transmission line between frames for as short as possible.

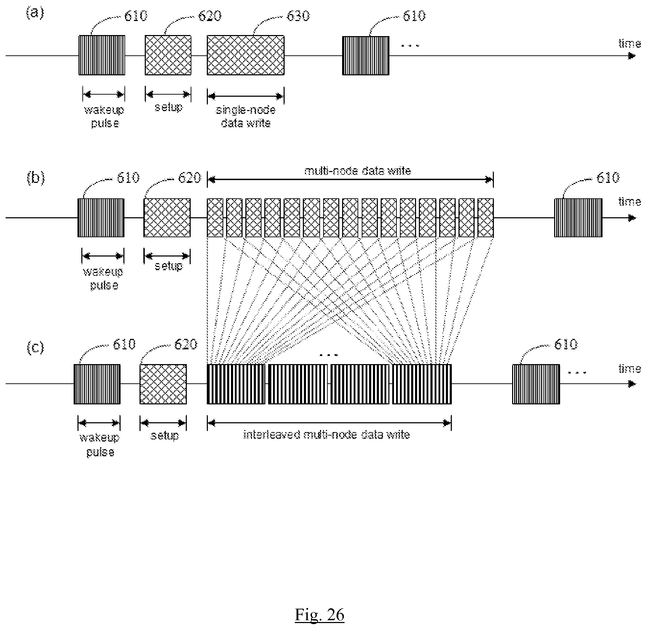

FIGS. 26a - 26c depict single-node and multi-node "downlink" or "write" sequences. The timing diagrams correspond to FIGS. 25a - 25c and similar descriptions apply. In FIGS 26a - 26c, however, data is written to a node or to multiple nodes. Possible cases include: data written to a single node, the same data written to multiple nodes and different, multiple data written to multiple nodes. Obviously, a sequence of single-data, single-node transfers would suffice in all such cases, however, the sequences given in FIGS. 26b and 26c greatly increase the efficiency of the transfers by taking up as few as possible communication cycles and by forming the largest possible data frames consistent with the transferred data.

The message sequences depicted in FIGS. 24 - 26c are well suited for priority-based communications. In general, each communication sequence is self-contained and of relatively short duration. Therefore, low-priority network maintenance sequences and/or low-priority sensor data uploads may be freely interspersed with high-priority data uploads and/or high-priority control functions. Overall network and communications control is retained by the communications master that may schedule high-priority messages and/or data transfers without interference or much delay from lower-priority network functions. Also, the communications master retains physical control of the network, because miscommunicating repeaters or nodes are forced off the network by their built-in health-assessment logic and fail-safe logic.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

## Claims

1. A downhole signal transmission system for communicating data along a string of downhole components comprising a plurality of interconnected downhole components, comprising:
one or more communications lines adapted to carry radio frequency signals along the string of downhole components;
at least one communications master selected from the group: a surface interface, a downhole interface, and a node; and
a plurality of low-power signal repeaters spaced along said string of downhole components, said signal repeaters being receptive to radio frequency signals,
wherein said at least one communications master is adapted to communicate over said communication line(s) by modulating data onto pulses of radio frequency energy, and
wherein at least one of said plurality of signal repeaters is adapted to regenerate said pulses of radio frequency energy involving the decoding of only a portion of said data modulated onto said pulses.

2. A downhole signal transmission system as in claim 1, wherein the system is adapted to transmit said radiofrequency pulses in one or more data frames comprising at least one wakeup pulse and one or more data pulses, wherein said at least one wakeup pulse is intended for waking up at least one of said signal repeaters and/or at least one of said communications masters.

3. A downhole signal transmission system as in claim 1, wherein said at least one of said communication masters is adapted to transmit at least a portion of said data by pulse-code modulation.

4. A downhole signal transmission system as in claim 1, wherein said at least one of said communication masters is adapted to transmit at least a portion of said data by pulse-position modulation.

5. A downhole signal transmission system as in claim 1, wherein said radiofrequency energy is in a frequency range 10 MHz to 3 GHz.

6. A downhole signal transmission system as in claim 1, wherein at least one signal repeater comprises:
at least one detector circuit receptive to said pulses of radiofrequency energy;
at least one circuit adapted to regenerate said pulses of radiofrequency energy; and
at least one timing circuit adapted to inhibit the regeneration of further pulses of radio frequency energy for a time period after the regeneration of a pulse of radiofrequency energy.

7. A downhole signal transmission system as in claim 1, wherein said at last one communications master comprises a node including sensors and/or actuators.

8. A downhole signal transmission system as in claim 1, wherein the at least one communications master and/or the repeaters are connected to the one or more communications lines in fail-safe fashion to provide fail-safe operation on the one or more communications lines.

9. A method for communicating data along a string of downhole components comprising a plurality of interconnected downhole components including at least one communications master selected from the group: a surface interface, a downhole interface, and a node, and a plurality of low-power signal repeaters spaced along said string of downhole components, comprising the steps of:
said communications master modulating data onto pulses of radiofrequency energy for transmission through one or more communications lines connecting the string of downhole components;
at least one of said signal repeaters receiving said pulses of radiofrequency energy and regenerating said pulses of radiofrequency energy involving the decoding of only a portion of said data modulated onto said pulses.

10. A method as in claim 9, wherein said modulating step comprises transmitting said pulses in one or more data frames comprising at least one wakeup pulse and one or more data pulses, wherein said at least one wakeup pulse wakes up at least one of said signal repeaters and/or at least one of said communications masters.

11. A method as in claim 9, wherein said modulating step comprises said communications master transmitting at least a portion of said data by pulse-code modulation.

12. A method as in claim 9, wherein said modulating step comprises said communications masters transmitting at least a portion of said data by pulse-position modulation.

13. A method as in claim 9, wherein said modulating step comprises transmitting said radio frequency energy in a frequency range 10 MHz to 3 GHz.

14. A method as in claim 9, wherein regenerating said pulses of radiofrequency energy without decoding all of said data modulated onto said pulses comprises the steps of:
at least one detector circuit receiving said pulses of radiofrequency energy;
at least one circuit regenerating said pulses of radiofrequency energy; and
at least one timing circuit inhibiting the regeneration of further pulses of radiofrequency energy for a time period after the regeneration of a pulse of radiofrequency energy.

15. A method as in claim 9, further comprising the step of connecting said communications master and/or the repeaters to the one or more communications lines in fail-safe fashion to provide fail-safe operation on the one or more communications lines.

## Patentansprüche

1. Bohrloch-Signalübertragungssystem zum Kommunizieren von Daten entlang eines Strangs von Bohrlochkomponenten, die eine Mehrzahl von miteinander verbundenen Bohrlochkomponenten umfassen, umfassend:
eine oder mehrere zum Übertragen von Hochfrequenzsignalen entlang des Strangs von Bohrlochkomponenten geeignete Kommunikationsleitungen;
mindestens einen Kommunikations-Master, der aus der Gruppe ausgewählt ist: eine Oberflächenschnittstelle, eine Bohrlochschnittstelle und ein Knoten;
und eine Mehrzahl von Signal-Wiederholern mit geringem Leistungsverbrauch, die entlang des Strangs von Bohrlochkomponenten beabstandet sind, wobei die Signal-Wiederholer für Hochfrequenzsignale empfänglich sind,
wobei der mindestens eine Kommunikationsmaster geeignet ist, über die Kommunikationsleitung(en) durch Modulieren von Daten auf Impulsen von Hochfrequenzenergie zu kommunizieren; und
wobei wenigstens einer der Mehrzahl von Signal-Wiederholern geeignet ist, die Impulse von Hochfrequenzenergie zu regenerieren involvierend das Decodieren nur eines Teils der auf die Impulse modulierten Daten.

2. Bohrloch-Signalübertragungssystem nach Anspruch 1, wobei das System eingerichtet ist, die Hochfrequenzimpulse in einem oder mehreren Datenrahmen zu übertragen, umfassend mindestens einen Aufweckimpuls und einen oder mehrere Datenimpulse, wobei der mindestens eine Aufweckimpuls bestimmt ist, mindestens einen der Signal-Wiederholer und/oder mindestens einen der Kommunikationsmaster aufzuwecken.

3. Bohrloch-Signalübertragungssystem nach Anspruch 1, wobei der mindestens eine der Kommunikationsmaster mindestens einen Teil der Daten durch Impulscodemodulation überträgt.

4. Bohrloch-Signalübertragungssystem nach Anspruch 1, wobei der mindestens eine der Kommunikationsmaster mindestens einen Teil der Daten durch Impulslagenmodulation überträgt.

5. Bohrloch-Signalübertragungssystem nach Anspruch 1, wobei die Hochfrequenzenergie in einem Frequenzbereich von 10 MHz bis 3 GHz liegt.

6. Bohrloch-Signalübertragungssystem nach Anspruch 1, wobei mindestens ein Signal-Wiederholer aufweist:
mindestens eine Detektorschaltung, die für die Impulse von Hochfrequenzenergie empfänglich ist;
mindestens eine Schaltung, die die Impulse der Hochfrequenzenergie regeneriert; und
mindestens eine Zeitgeberschaltung, die für eine Zeitperiode nach der Regeneration eines Impulses von Hochfrequenzenergie die Regeneration weiterer Impulse von Hochfrequenzenergie verhindert.

7. Bohrloch-Signalübertragungssystem nach Anspruch 1, wobei der wenigstens eine Kommunikationsmaster einen Knoten umfasst, der Sensoren und/oder Aktuatoren enthält.

8. Bohrloch-Signalübertragungssystem nach Anspruch 1, wobei der mindestens eine Kommunikationsmaster und/oder die Wiederholer in einer fehlersicheren Weise mit der einen oder den mehreren Kommunikationsleitungen verbunden sind, um einen fehlersicheren Betrieb auf der einen oder den mehreren Kommunikationsleitungen bereitzustellen.

9. Verfahren zum Kommunizieren von Daten entlang eines Strangs von Bohrlochkomponenten, die eine Mehrzahl von miteinander verbundenen Bohrlochkomponenten umfassen, einschließlich mindestens einen Kommunikationsmaster, der aus der Gruppe ausgewählt ist: eine Oberflächenschnittstelle, eine Bohrlochschnittstelle und ein Knoten, und eine Mehrzahl von Signal-Wiederholer mit niedriger Leistung, die entlang des Strangs von Bohrlochkomponenten beabstandet sind, mit den folgenden Schritten:
der Kommunikationsmaster moduliert Daten auf Impulse von Hochfrequenzenergie zur Übertragung durch eine oder mehrere Kommunikationsleitungen, die den Strang von Bohrlochkomponenten verbinden;
wobei mindestens einer der Signal-Wiederholer für die Impulse der Hochfrequenzenergie empfänglich ist und die Impulse der Hochfrequenzenergie regeneriert, ohne alle auf die Impulse modulierten Daten zu decodieren.

10. Verfahren nach Anspruch 9, wobei der Modulationsschritt das Senden der Impulse in einem oder mehreren Datenrahmen mit mindestens einem Weckimpuls und einem oder mehreren Datenimpulsen umfasst, wobei der mindestens eine Weckimpuls mindestens einen der Signal-Wiederholer und/oder mindestens einer der Kommunikationsmaster aufweckt.

11. Verfahren nach Anspruch 9, wobei der Modulationsschritt umfasst, dass der Kommunikationsmaster mindestens einen Teil der Daten durch Impulscodemodulation überträgt.

12. Verfahren nach Anspruch 9, wobei der Modulationsschritt umfasst, dass die Kommunikationsmaster mindestens einen Teil der Daten durch Impulslagenmodulation übertragen.

13. Verfahren nach Anspruch 9, wobei der Modulationsschritt das Übertragen der Hochfrequenzenergie in einem Frequenzbereich von 10 MHz bis 3 GHz umfasst.

14. Verfahren nach Anspruch 9, wobei das Regenerieren der Impulse von Hochfrequenzenergie ohne Decodieren aller auf die Impulse modulierten Daten folgende Schritte umfasst:
mindestens eine Detektorschaltung empfängt die Impulse von Hochfrequenzenergie;
mindestens eine Schaltung regeneriert die Impulse der Hochfrequenzenergie; und
mindestens eine Zeitgeberschaltung verhindert für eine Zeitperiode nach der Regeneration eines Impulses von Hochfrequenzenergie die Regeneration weiterer Impulse von Hochfrequenzenergie.

15. Verfahren nach Anspruch 9, ferner umfassend den Schritt des Verbindens des Kommunikationsmasters und/oder der Wiederholer mit der einen oder den mehreren Kommunikationsleitungen in einer fehlersicheren Weise, um einen fehlersicheren Betrieb auf der einen oder den mehreren Kommunikationsleitungen bereitzustellen.

## Revendications

1. Système de transmission de signaux en fond de trou pour communiquer des données le long d'un train de composants en fond de trou comprenant plusieurs composants en fond de trou reliés entre eux, comprenant :
une ou plusieurs lignes de communication aptes à porter des signaux de radiofréquence le long du train de composants en fond de trou ;
au moins un maître de communications choisi dans le groupe : interface de surface, interface de fond de trou, et noeud ; et
plusieurs répétiteurs de signaux à faible puissance qui sont espacés le long du train de composants en fond de trou, les répétiteurs de signaux étant réceptifs aux signaux de radiofréquence,
le ou les maîtres de communication étant aptes à communiquer par l'intermédiaire de la ou des lignes de communication en modulant des données en impulsions d'énergie radiofréquence, et
l'un au moins des répétiteurs de signaux étant apte à régénérer les impulsions d'énergie radiofréquence impliquant le décodage d'une partie seulement des données modulées en impulsions.

2. Système de transmission de signaux en fond de trou selon la revendication 1, ledit système étant apte à transmettre des impulsions radiofréquence dans une ou plusieurs trames comprenant au moins une impulsion de réveil et une ou plusieurs impulsions de données, la ou les impulsions de réveil étant destinées à réveiller l'un au moins des répétiteurs de signaux et/ou l'un au moins des maîtres de communication.

3. Système de transmission de signaux en fond de trou selon la revendication 1, dans lequel le ou les maîtres de communication sont aptes à transmettre une partie au moins des données par modulation par impulsions codées.

4. Système de transmission de signaux en fond de trou selon la revendication 1, dans lequel le ou les maîtres de communication sont aptes à transmettre une partie au moins des données par modulation d'impulsions en position.

5. Système de transmission de signaux en fond de trou selon la revendication 1, dans lequel l'énergie radiofréquence est située dans une plage de fréquence de 10 MHz à 3 GHz.

6. Système de transmission de signaux en fond de trou selon la revendication 1, dans lequel au moins un répétiteur de signaux comprend :
au moins un circuit détecteur réceptif auxdites impulsions d'énergie radiofréquence ;
au moins un circuit apte à régénérer les impulsions d'énergie radiofréquence ; et
au moins un circuit de synchronisation apte à empêcher la régénération d'autres impulsions d'énergie radiofréquence pendant une durée qui suit la régénération d'une impulsion de radiofréquence.

7. Système de transmission de signaux en fond de trou selon la revendication 1, dans lequel le ou les maîtres de communication comprennent un noeud contenant des capteurs et/ou des actionneurs.

8. Système de transmission de signaux en fond de trou selon la revendication 1, dans lequel le ou les maîtres de communication sont reliés avec une sécurité intégrée à la ou aux lignes de communication, afin de fournir un fonctionnement avec une sécurité intégrée sur la ou les lignes de communication.

9. Procédé pour communiquer des données le long d'un train de composants en fond de trou comprenant plusieurs composants en fond de trou reliés entre eux, contenant au moins un maître de communications choisi dans le groupe :
interface de surface, interface de fond de trou, et noeud, et plusieurs répétiteurs de signaux à faible puissance qui sont espacés le long du train de composants en fond de trou, les répétiteurs de signaux étant réceptifs aux signaux de radiofréquence, comprenant les étapes suivantes :
ledit maître de communication module des données en impulsions d'énergie radiofréquence pour une transmission par l'intermédiaire d'une ou plusieurs lignes de communication qui relient le train de composants en fond de trou ;
l'un au moins des répétiteurs de signaux reçoit les impulsions d'énergie radiofréquence et régénère les impulsions d'énergie radio fréquence impliquant le décodage d'une partie seulement des données modulées en impulsions.

10. Procédé selon la revendication 9, selon lequel l'étape de modulation comprend la transmission desdites impulsions dans une ou plusieurs trames de données comprenant au moins une impulsion de réveil et une ou plusieurs impulsions de données, la ou les impulsions de réveil réveillant l'un au moins des répétiteurs de signaux et/ou l'un au moins des maîtres de communication.

11. Procédé selon la revendication 9, selon lequel l'étape de modulation comprend la transmission, par le maître de communication, d'une partie au moins des données par modulation par impulsions codées.

12. Procédé selon la revendication 9, selon lequel l'étape de modulation comprend la transmission, par les maîtres de communication, d'une partie au moins des données par modulation d'impulsions en position.

13. Procédé selon la revendication 9, selon lequel l'étape de modulation comprend la transmission de l'énergie radiofréquence dans une plage de fréquence de 10 MHz à 3 GHz.

14. Procédé selon la revendication 9, selon lequel la régénération des impulsions d'énergie radio fréquence sans décoder toutes les données modulées en impulsions comprend les étapes suivantes :
au moins un circuit détecteur reçoit lesdites impulsions d'énergie radiofréquence ;
au moins un circuit régénère les impulsions d'énergie radiofréquence ; et
au moins un circuit de synchronisation empêche la régénération d'autres impulsions d'énergie radiofréquence pendant une durée qui suit la régénération d'une impulsion de radiofréquence.

15. Procédé selon la revendication 9, comprenant également l'étape qui consiste à relier avec une sécurité intégrée le maître de communication et/ou les répétiteurs à une ou plusieurs lignes de communication, afin de fournir un fonctionnement avec une sécurité intégrée sur la ou les lignes de communication.
